# EUROPÄISCHE PATENTSCHRIFT

(11) **EP 3 265 537 B1**
(45) Veröffentlichungstag und Bekanntmachung des Hinweises auf die Patenterteilung: **09.10.2019**
(21) Anmeldenummer: 16710687.1
(22) Anmeldetag: 01.03.2016
(51) Int. Cl.: C09K 11/02, C09K 11/77

(54) **LEUCHTSTOFFPARTIKEL MIT EINER SCHUTZSCHICHT UND VERFAHREN ZUR HERSTELLUNG DER LEUCHTSTOFFPARTIKEL MIT DER SCHUTZSCHICHT**
FLUORESCENT PARTICLES WITH A PROTECTIVE LAYER, AND METHOD FOR PRODUCING THE FLUORESCENT PARTICLES WITH THE PROTECTIVE LAYER
PARTICULE DE SUBSTANCE LUMINESCENTE POURVUE D'UNE COUCHE DE PROTECTION ET PROCÉDÉ DE PRODUCTION DE LA PARTICULE DE SUBSTANCE LUMINESCENTE POURVUE D'UNE COUCHE DE PROTECTION

(30) Priorität: 06.03.2015 DE 102015103326
(43) Veröffentlichungstag der Anmeldung: 10.01.2018
(73) Patentinhaber: OSRAM Opto Semiconductors GmbH, 93055 Regensburg (DE); OSRAM GmbH, 80807 München (DE)
(72) Erfinder: FIEDLER, Tim, 86899 Landsberg am Lech (DE); TRAGL, Sonja, 86199 Augsburg (DE); LANGE, Stefan, 86157 Augsburg (DE)
(74) Vertreter: Epping - Hermann - Fischer
(86) Internationale Anmeldenummer: PCT/EP2016/054327
(87) Internationale Veröffentlichungsnummer: WO 2016/142219

(56) Entgegenhaltungen:
- WO-A1-2009/062579
- DE-C1- 19 937 420
- US-A1- 2011 279 011

## Beschreibung

Leuchtstoffe, die in der Lage sind, Primärstrahlung mittels Strahlungskonversion in konvertierte Strahlung, Sekundärstrahlung mit längerer Wellenlänge umzuwandeln, sind häufig sehr hydrolyseempfindlich. Aufgrund der Hydrolyse der Leuchtstoffe können daher viele Leuchtvorrichtungen, bei denen im Strahlengang einer primären Strahlungsquelle ein Leuchtstoff angeordnet ist, mit der Zeit ihren Farbpunkt unerwünschterweise verändern. Weiterhin nimmt häufig auch die Konversionseffizienz des Leuchtstoffs aufgrund der Hydrolyse des Leuchtstoffs stark ab.

Diese Patentanmeldung beansprucht die Priorität der deutschen Patentanmeldung 10 2015 103 326.7, deren Offenbarungsgehalt hiermit durch Rückbezug aufgenommen wird.

Um derartige Probleme zu vermindern, ist es bekannt, Leuchtstoffe mit Siliziumdioxidschichten zu schützen, die beispielsweise durch Hydrolyse von Tetraethoxysilan (TEOS) in flüssiger Lösung auf die Leuchtstoffpartikel aufgebracht werden können. Eine andere Möglichkeit ist die Abscheidung eines Beschichtungsmaterials mittels chemischer Gasphasenabscheidung (CVD). Derartige Verfahren sind aber sehr zeit- und kostenaufwändig, da separate Chemikalien für die Gasphasenabscheidung, beziehungsweise die Abscheidung einer Siliziumdioxidschicht bereitgestellt werden müssen.

Aus der US-Patentanmeldung US 2006/0263627 A1 ist die Erzeugung einer Schutzschicht auf einem Leuchtstoffpartikel bekannt, wobei große Mengen Säure zur Ausbildung einer Beschichtung hinzugegeben werden. Dieses Verfahren kann jedoch leicht zur Auflösung eines großen Anteils des Leuchtstoffs führen, da in der Regel eine große Menge Säure hinzugegeben wird.

Die Druckschriften WO 2009/062579 A1, DE 19937420 C1 und US 2011/0279011 A1 offenbaren beschichtete Leuchtstoffpartikel. Die Aufgabe der vorliegenden Erfindung besteht darin, ein Verfahren zur Herstellung von Leuchtstoffpartikeln eines Si-haltigen und/oder Al-haltigen Leuchtstoffs mit einer Schutzschicht und einen Si-haltigen und/oder Al-haltigen Leuchtstoff mit einer Schutzschicht bereitzustellen, der bezüglich der oben genannten technischen Probleme verbessert ist.

Vorteilhafte Ausgestaltungen des Verfahrens zur Herstellung der Leuchtstoffpartikel sowie vorteilhafte Ausgestaltungen der neuartigen Leuchtstoffpartikel mit der Schutzschicht sind Gegenstand weiterer abhängiger Ansprüche.

Gegenstand der Erfindung nach dem Patentanspruch 1 ist ein Verfahren zur Herstellung von Leuchtstoffpartikeln eines Si-haltigen und/oder Al-haltigen Leuchtstoffs mit einer Schutzschicht umfassend die Verfahrensschritte:
A) Behandeln des siliziumhaltigen und/oder aluminiumhaltigen Leuchtstoffs mit einer Säurelösung, wobei der pH-Wert der Säurelösung innerhalb eines Bereichs von pH 3,5 bis 7 für einen Zeitraum von zumindest einer Stunde gehalten wird und wobei eine siliziumhaltige Schicht auf den Leuchtstoffpartikeln gebildet wird, die einen höheren Gehalt an Silizium aufweist auf der Oberfläche als die Leuchtstoffpartikel und/oder eine aluminiumhaltige Schicht auf den Leuchtstoffpartikeln gebildet wird, die einen im Vergleich zu den Leuchtstoffpartikeln veränderten Gehalt an Aluminium auf der Oberfläche aufweist,
B) Tempern der behandelten Leuchtstoffpartikel bei einer Temperatur von zwischen 250 °C und 400 °C unter Erzeugung der Schutzschicht.

Hier und im Folgenden beinhaltet die Bezeichnung "Leuchtstoff" neben einem reinen Leuchtstoff auch Gemenge aus Leuchtstoff-Phasen, die neben einer Hauptphase eventuell zusätzlich Sekundär- oder Nebenphasen enthalten und die zur Umwandlung einer Primärstrahlung mittels Strahlungskonversion in eine Sekundärstrahlung geeignet sind.

Im Gegensatz zu herkömmlichen Säurebehandlungsverfahren wird bei diesem erfindungsgemäßen Verfahren der pH-Wert der Säurelösung über einen gewissen Zeitraum von zumindest einer Stunde in einem enger umgrenzten pH-Wert-Bereich von 3,5 bis 7 gehalten. Überraschenderweise führt ein derartiges Verfahren zu einer signifikant erhöhten Stabilität der Leuchtstoffpartikel gegen Hydrolyse, sodass Leuchtstoffe, die mittels des erfindungsgemäßen Verfahrens mit einer Schutzschicht versehen wurden, auch geeignet sind für Anwendungen in Umgebungen mit hoher Luftfeuchtigkeit.

Bevorzugt wird dabei der pH-Wert zwischen 4 bis 6,5, weiter bevorzugt zwischen einem pH-Wert von 4,5 bis 6 über einen Zeitraum von zumindest bevorzugt drei Stunden, weiter bevorzugt zumindest vier Stunden eingestellt. Der gesamte Zeitraum der Säurebehandlung kann sich im Rahmen von zwei bis sieben Stunden, bevorzugt vier bis fünf Stunden bewegen.

Die Erfinder haben festgestellt, dass bei derartigen pH-Bereichen besonders kontrolliert eine partielle Zersetzung von leicht zersetzbaren Haupt- und/oder Sekundärphasen des Leuchtstoffs auftritt und sich dann der pH-Wert schnell ändert. Der pH-Wert kann dabei mit einem sehr kleinen Wert, typischerweise einem pH-Wert < 2 anfangen, wobei aber aufgrund des erfindungsgemäßen Verfahrens danach dann über einen längeren Zeitraum der pH-Wert innerhalb der oben genannten Bereiche gehalten wird, um eine besonders kontrollierte Reaktion des Leuchtstoffs mit der Säurelösung zu bedingen.

Während des Verfahrensschrittes A) können insbesondere hydroxidische Verbindungen der im Leuchtstoff vorhandenen Elemente gebildet werden, die dann mittels des Temperns im Schritt B) in die Schutzschicht umgewandelt werden können, wobei es unter Eliminierung von Wasser zur Quervernetzung der hydroxidischen Verbindungen kommen kann. Das Tempern läuft bei Temperaturen zwischen 250°C bis 400°C, bevorzugt 300°C bis 350°C ab..

Die im Verfahrensschritt A) gebildete Si-haltige Schicht, die einen im Vergleich zu den Leuchtstoffpartikeln veränderten Gehalt an Aluminium auf der Oberfläche aufweist, kann insbesondere einen verringerten Gehalt an Al aufweisen.

Während des Verfahrensschrittes A) werden bevorzugt die Leuchtstoffpartikel in einer Säurelösung, beispielsweise einer wässrigen Säurelösung, in ein Behältnis, beispielsweise ein Glasbehältnis eingebracht und dann durch Rühren eine Suspension gebildet. Dabei können im Verfahrensschritt A) als Säuren insbesondere mineralische Säuren wie Salzsäure und/oder organische Säuren wie Essigsäure verwendet werden.

Weiterhin kann die Suspension auf einer Temperatur von 20 °C bis 100 °C, bevorzugt 50 bis 90 °C, weiter bevorzugt 75 bis 85 °C gehalten werden. Der Zeitraum für die Säurebehandlung kann dabei zwischen ein bis zehn Stunden, bevorzugt zwei bis sieben Stunden, weiter bevorzugt vier bis fünf Stunden betragen.

Im Verfahrensschritt A) kann zumindest eines der folgenden Verfahren zur pH-Kontrolle angewandt werden:
- Zugabe einer Säure in Abhängigkeit vom pH-Wert der Säurelösung,
- Zugabe einer Pufferlösung,
- Zugabe einer definierten Menge an Säurelösung in Abhängigkeit von der Menge an Leuchtstoff.

Im Fall der Zugabe einer Säure in Abhängigkeit vom pH-Wert der Säurelösung kann insbesondere eine Dosierpumpe verwendet werden, die verbunden mit einem pH-Meter ist, wobei dann die Säurelösung in Abhängigkeit vom gemessenen pH-Wert hinzugegeben wird und dadurch der pH-Wert innerhalb des bereits oben genannten Bereichs gehalten wird.

Bei Verwendung einer Pufferlösung, beispielsweise einer Essigsäure/Acetat-Pufferlösung wird eine definierte Menge einer Pufferlösung hinzuzugeben, deren pH-Wert durch die Einstellung der Mengen an Säure und korrespondierender Base eingestellt werden kann. Beispielsweise weist ein Essigsäure/Acetat-Puffer mit äquimolaren Mengen an Säure und Base einen pH-Wert von 4,76 auf.

Eine weitere Möglichkeit für eine Pufferlösung ist ein Citrat-Puffer auf der Basis von Zitronensäure oder ein Kohlensäure-Silikat-Puffer.

Eine weitere Möglichkeit, einen gezielten pH-Wert-Bereich während der Säurebehandlung der Leuchtstoffpartikel einzustellen besteht darin, eine definierte Menge an Säurelösung in Abhängigkeit von der Menge an Leuchtstoffpartikeln hinzuzugeben. Bei dieser Verfahrensvariante ändert sich der pH-Wert zu Beginn der Reaktion sehr schnell und stabilisiert sich dann auf dem gewünschten Wert beziehungsweise innerhalb eines gewünschten pH-Wert-Bereichs. Dabei ist es vorteilhaft, durch Experimente für jeden Leuchtstoff und verschiedene Mengen an Leuchtstoff festzustellen, wieviel Säurelösung zugegeben werden muss, damit sich der pH-Wert im gewünschten Bereich stabilisiert.

Bevorzugt ist die oben genannte Variante einer Zugabe der Säurelösung in Abhängigkeit vom pH-Wert, da durch diese Verfahrensvariante besonders gut der pH-Wert während des gesamten Verfahrensschrittes A) kontrolliert werden kann.

Gemäß einer vorteilhaften Ausführungsform eines erfindungsgemäßen Verfahrens kann in Verfahrensschritt B) das Tempern bei Temperaturen zwischen 300 bis 350 °C durchgeführt werden. Bei derartigen Temperaturen können besonders gut Leuchtstoffpartikel mit einer Schutzschicht erzeugt werden, die besonders stabil und damit hydrolysebeständig sind.

Weiterhin kann in Verfahrensschritt B) das Tempern auch in einer sauerstoffhaltigen Atmosphäre durchgeführt werden, sodass auch die Möglichkeit besteht, weiteren Sauerstoff in die Schutzschicht, die sich während des Temperns bildet, einzubauen. Bevorzugt kann die Umgebung der Leuchtstoffpartikel während des Temperns Luft oder Mischungen von Luft und anderen Gasen, zum Beispiel Stickstoff, Edelgase, Sauerstoff, enthalten. Während des Temperns kann ein breiter Bereich, was die Heizrate angeht, verwendet werden, insbesondere kann die Heizrate während des Temperns zwischen 1 °C/h und 100 °C/h, bevorzugt zwischen 5 °C/h und 50 °C/h, weiter bevorzugt zwischen 10 °C/h und 20 °C /h betragen.

Zwischen dem Verfahrensschritt A) und dem Tempern im Verfahrensschritt B) kann weiterhin auch ein Verfahrensschritt A1) vorhanden sein, in dem die Leuchtstoffpartikel nach der Säurebehandlung für zwei bis 20 Stunden bei 40 bis 100 °C getrocknet werden. Anschließend ist auch ein Sieben der Leuchtstoffpartikel möglich.

Weiterhin können die Leuchtstoffpartikel aus der Säurelösung, der Suspension durch einen Saugfilter abgefiltert werden und danach ausgiebig mit Wasser und auch mit Ethanol gewaschen werden.

Bei einer weiteren Ausführungsform eines erfindungsgemäßen Verfahrens wird ein siliziumhaltiger und/oder aluminiumhaltiger Leuchtstoff verwendet, der zusätzlich Erdalkali-Ionen aufweist und wobei im Verfahrensschritt A) eine Schicht auf den Leuchtstoffpartikeln gebildet wird, die einen geringeren Gehalt an Erdalkali-Ionen aufweist als die Leuchtstoffpartikel.

Die Erfinder haben festgestellt, dass bei Verwendung eines siliziumhaltigen und/oder aluminiumhaltigen Leuchtstoffs, der zusätzlich noch Erdalkali-Ionen aufweist, im Verfahrensschritt A) besonders bevorzugt die Erdalkali-Ionen aus Oberflächenbereichen der Leuchtstoffpartikel entfernt werden und sich anschließend eine Schutzschicht bildet, die gegenüber dem unter der Schutzschicht befindlichen Leuchtstoff-Material einen geringeren Gehalt an Erdalkali-Ionen aufweist.

Die mittels eines erfindungsgemäßen Verfahrens mit einer Schutzschicht versehenen Leuchtstoffpartikel können insbesondere einen siliziumhaltigen und/oder aluminiumhaltigen Leuchtstoff umfassen, wobei die auf den Leuchtstoff befindliche Schutzschicht einen zumindest um 40 %, bevorzugt zumindest um 60 % gegenüber dem Leuchtstoff erhöhten Atom%-Gehalt an Silizium aufweist und/oder einen zumindest um 10 Atom%, bevorzugt zumindest um 20 Atom% gegenüber den Leuchtstoff erniedrigten Gehalt an Aluminium aufweist.

Es wurde insbesondere festgestellt, dass bei dem Säurebehandlungsschritt, dem Verfahrensschritt A) sich der Gehalt an Silizium der Schutzschicht erhöht, während der Gehalt an Aluminium auf der Oberfläche des Leuchtstoffs durch den Säurebehandlungsschritt reduziert wird.

Im Verfahrensschritt A) der Säurebehandlung werden insbesondere Oberflächenbereiche der Leuchtstoffpartikel durch die Säure ausgelaugt, wobei die im Leuchtstoff vorhandenen Elemente unterschiedlich mit der Säurelösung reagieren und beispielsweise Silizium angereichert wird, während Aluminium sich im Vergleich zu den unter der Schutzschicht befindlichen, von der Säure nicht angegriffenen Leuchtstoffmaterial eher verringert.

Weiterhin können die Leuchtstoffpartikel zusätzlich auch Erdalkali-Ionen umfassen und die Schutzschicht einen zumindest um 40 %, bevorzugt zumindest um 60 % gegenüber dem Leuchtstoffmaterial erniedrigten Gehalt an Erdalkali-Ionen aufweisen. Wie bereits oben besprochen, werden Erdalkali-Ionen als Bestandteil der Leuchtstoffpartikel durch die Säurebehandlung eher ausgewaschen, sodass sich deren Gehalt in der Schutzschicht gegenüber nicht von Säuren ausgelaugtem Leuchtstoffmaterial verringert.

Bei einer weiteren Ausführungsform der vorliegenden Erfindung enthalten die Leuchtstoffpartikel zusätzlich Stickstoff, wobei die durch das erfindungsgemäße Verfahren aus dem Leuchtstoffmaterial gebildete Schutzschicht einen zumindest um 40 Atom%, bevorzugt zumindest um 60 Atom% gegenüber dem Leuchtstoff erniedrigten Gehalt an Stickstoff aufweist. Insbesondere wurde festgestellt, dass sich der Gehalt an Stickstoff bei dem Säurebehandlungsschritt A) ähnlich stark erniedrigt wie der Gehalt an Erdalkali-Ionen, insbesondere Calcium, Strontium und Barium.

Gemäß einer weiteren Ausführungsform von mittels des erfindungsgemäßen Verfahrens hergestellten Leuchtstoffpartikeln kann der Siliziumgehalt der Schutzschicht um etwa 40 bis maximal 80 Atom% gegenüber dem unter der Schutzschicht befindlichen Leuchtstoff erhöht sein. Im Gegensatz dazu kann der Aluminiumgehalt der Schutzschicht um etwa 10 bis maximal 50 Atom%, oder auch 10 Atom% bis 30 Atom% gegenüber dem unterhalb der Schutzschicht befindlichen Leuchtstoffmaterial erniedrigt sein. Der Gehalt der Schutzschicht sowohl an Stickstoff wie auch an der Summe der Erdalkali-Ionen kann zwischen 40 bis 100 %, oder auch zwischen 40 bis 95% gegenüber dem Material des Leuchtstoffs, das sich unterhalb der Schutzschicht befindet, erniedrigt sein.

Gegenstand der Erfindung sind auch Leuchtstoffpartikel, die eine Schutzschicht umfassen, das gemäß eines der oben beschriebenen Verfahren herstellbar ist.

Wie bereits besprochen, wird dabei mittels eines Säurebehandlungsschrittes A) aus den Oberflächenbereichen der Leuchtstoffpartikel Material entfernt, sodass im anschließenden Temperschritt B) eine besonders beständige Schutzschicht aus diesen Oberflächenbereichen gebildet werden kann. Röntgenfotoelektronenspektroskopie-Messungen (XPS-Messungen) haben dabei gezeigt, dass eine Schutzschicht, die mittels dieses Verfahrens herstellbar ist, neben den im intakten Leuchtstoff vorhandenen Elementen, beispielsweise ausgewählt aus Silizium, Aluminium, Stickstoff, Erdalkali-Ionen auch noch weitere Elemente enthalten kann, beispielsweise Sauerstoff, der z. B. mittels des Behandlungsschrittes A) mit insbesondere einer wässrigen Säurelösung oder auch mittels des Temperns im Schritt B) in einer sauerstoffhaltigen Atmosphäre in die Schutzschicht eingeführt werden kann.

Verschiedenste Varianten des erfindungsgemäßen Verfahrens können mit unterschiedlichen aluminiumhaltigen und/oder siliziumhaltigen Leuchtstoffpartikeln durchgeführt werden. Als mögliche Kandidaten für Leuchtstoffe kommen insbesondere, aber nicht ausschließlich folgende Leuchtstoffe in Betracht: (Ba_{1-x-y}SrₓCa_{y})SiO₄:Eu²⁺ (0 ≤ x ≤ 1, 0 ≤ y ≤ 1), (Ba_{1-x-y}Sr_{xCay})₃SiO₅ : Eu²⁺ (0 ≤ x ≤ 1, 0 ≤ y ≤ 1), Li₂SrSiO₄ : Eu²⁺, Ca₈Mg(SiO₄)₄Cl₂:Eu²⁺, Oxo-Nitride wie (Ba_{1-x-y}SrₓCa_{y})Si₂O₂N₂:Eu²⁺ (0 ≤ x ≤ 1; 0 ≤ y ≤ 1), SrSiAl₂O₃N₂:Eu²⁺, Ba₄₋ₓCaₓSi₆ON₁₀:Eu²⁺ (0 ≤ x ≤ 1), (Ba₁₋ₓSrₓ)Y₂Si₂Al₂O₂N₅: Eu²⁺ (0 ≤ x ≤ 1), SrₓSi_{(6-y)}Al_{y}O_{y}N_{(8-y)} :Eu²⁺ (0.05 ≤ x ≤ 0.5; 0.001 ≤ y ≤ 0.5), Ba₃Si₆O₁₂N₂:Eu²⁺, Si_{6-z}Al_{z}O_{z}N_{8-z}:Eu²⁺ (0 ≤ z ≤ 0.42), MₓSi₁₂₋ₘ₋ₙAlₘ₊ₙOₙN₁₆₋ₙ:Eu²⁺ (M = Li, Mg, Ca, Y; x = m/v; v = Valenz von M, x ≤ 2), MₓSi₁₂₋ₘ₋ₙAlₘ₊ₙOₙN₁₆₋ₙ:Ce³⁺, AE₂₋ₓ₋ₐREₓEuₐSi_{1-y}O_{4-x-2y}Nₓ (AE=Sr, Ba, Ca, Mg; RE = Seltenerdmetallelement), AE₂₋ₓ₋ₐREₓEuₐSi_{1-y}O_{4-x-2y}Nₓ (AE=Sr, Ba, Ca, Mg; RE = Seltenerdmetallelement) Ba₃Si₆O₁₂N₂:Eu²⁺ oder Nitride wie La₃Si₆N₁₁:Ce³⁺, (Ba_{1-x-y}SrₓCa_{y})₂Si₅N₈:Eu²⁺, (Ca_{1-x-y}SrₓBa_{y})AlSiN₃:Eu²⁺ (0 ≤ x ≤ 1; 0 ≤ y ≤ 1), Sr(Sr₁₋ₓCaₓ)Al₂Si₂N₆:Eu²⁺ (0 ≤ x ≤ 0.2), Sr(Sr₁₋ₓCaₓ)Al₂Si₂N₆:Ce³⁺ (0 ≤ x ≤ 0,2) SrAlSi₄N₇:Eu²⁺, (Ba_{1-x-y}SrₓCa_{y})SiN₂:Eu²⁺ (0 ≤ x ≤ 1; 0 ≤ y ≤ 1), (Ba_{1-x-y}SrₓCa_{y}) SiN₂:Ce³⁺ (0 ≤ x ≤ 1; 0 ≤ y ≤ 1), (Sr₁₋ₓCaₓ)LiAl₃N₄:Eu²⁺ (0 ≤ x ≤ 1), (Ba_{1-x-y}SrₓCa_{y})Mg₂Al₂N₄:Eu²⁺ (0 ≤ x ≤ 1; 0 ≤ y ≤ 1), (Ba_{1-x-y}SrₓCa_{y})Mg₃SiN₄:Eu²⁺ (0 ≤ x ≤ 1; 0 ≤ y ≤ 1).

Gemäß einer besonders bevorzugten Ausführungsform umfassen die Leuchtstoffpartikel einen Leuchtstoff, der eine anorganische Substanz beinhaltet, die in ihrer Zusammensetzung zumindest das Element D, das Element A1, das Element AX, das Element SX und das Element NX beinhaltet (wobei D eines, zwei oder mehrere Elemente aus der Gruppe Mn, Ce, Pr, Nd, Sm, Eu, Tb, Dy, Ho, Er, Tm, Li, Na, K, Rb, Cs und Yb darstellt, A1 eines, zwei oder mehrere Elemente aus der Gruppe der divalenten Metalle darstellt, die nicht in D beinhaltet sind, *SX* eines, zwei oder mehrere Elemente aus der Gruppe der tetravalenten Metalle beinhaltend Si darstellt, AX eines, zwei oder mehrere Elemente aus der Gruppe der trivalenten Metalle darstellt, und NX eines, zwei oder mehrere Elemente aus der Gruppe O, N, S, C, Cl, F darstellt) und der dieselbe Kristallstruktur aufweist, wie Sr(SrₐCa₁₋ₐ)Si₂Al₂N₆.

Die Erfinder haben festgestellt, dass ein derartiger Leuchtstoff eine ganze Reihe von Vorteilen gegenüber herkömmlichen Leuchtstoffen aufweist, wie weiter unten beschrieben.

Im Folgenden wird ein Leuchtstoff, der "dieselbe Kristallstruktur aufweist, wie Sr(SrₐCa₁₋ₐ)Si₂Al₂N₆" als ein Leuchtstoff definiert, der neben der Raumgruppe P2₁ weiterhin auch in einer der Raumgruppen 1 bis 3 gemäß der International Tables Crystallography A, also in folgenden Raumgruppen beschrieben werden kann: P1, P2, P1 und dessen Länge der chemischen Bindungen zwischen den Elementen Al-N und Si-N berechnet aus den Gitterkonstanten und Atomkoordinaten gemäß einer Rietveld-Analyse innerhalb eines Wertes von ±15 % der in Figur 22 beschriebenen Werte liegt.
Gemäß einer weiteren Ausführungsform der vorliegenden Erfindung ist die Raumgruppe monoklin P2₁.

Gemäß einer weiteren Ausführungsform der vorliegenden Erfindung lässt sich die anorganische Substanz durch die folgende allgemeine Formel beschreiben:

(DₐA1_{b})(D_{c}A1_{d})SXₑAX_{f}NX_{g}

Wobei a+b ≤ 1 und c+d ≤ 1 und wobei die Parameter a, b, c, d, e, f und g die folgenden Bedingungen erfüllen 0 ≤ a ≤ 0,5; 0 ≤ c ≤ 0,5; 0 ≤ b ≤ 1; 0 ≤ d ≤ 1; a+c > 0; b+d < 2; 0,1 ≤ e ≤ 8; 0,1 ≤ f ≤ 16; 0,8 (f + 4/3 e + 2/3 (b + d)) ≤ g; und g ≤ 1,2 (f + 4/3 e + 2/3 (b + d))
Bevorzugt gilt Folgendes: 0 ≤ a ≤ 0,1; 0 ≤ c ≤ 0,1; 0 ≤ b ≤ 1; 0 ≤ d ≤ 1; a+c > 0; b+d < 2; 0,1 ≤ e ≤ 8; 0,1 ≤ f ≤ 16; 0,8 (f + 4/3 e + 2/3 (b + d)) ≤ g; und g ≤ 1,2 (f + 4/3 e + 2/3 (b + d)).

Gemäß einer weiteren Ausführungsform weist der Leuchtstoff eine allgemeine Summenformel A1 (AlₐM₁₋ₐ)SX₂AX₂NX₆: D auf. Dabei ist A1, zumindest ein zweiwertiges metallisches Element, beispielsweise Sr, M ein anderes zweiwertiges metallisches Element, beispielsweise Ca, SX enthält zumindest ein vierwertiges Element, wie z. B. Si und/oder C, AX enthält zumindest ein dreiwertiges Element, wie z.B. Al und/oder La und NX enthält zumindest ein Element ausgewählt aus der Gruppe N, O, F, Cl.

Weiterhin können die allgemeinen Elemente A1, M, SX, AX und NX in dieser Summenformel die bereits oben beschriebenen Bedeutungen haben, also D eines, zwei oder mehrere Elemente aus der Gruppe Mn, Ce, Pr, Nd, Sm, Eu, Tb, Dy, Ho, Er, Li, Na, K, Rb, Cs, besonders Li, Tm und Yb darstellen, A1 eines, zwei oder mehrere Elemente aus der Gruppe der divalenten Metalle darstellen, die nicht in D beinhaltet sind, SX eines, zwei oder mehrere Elemente aus der Gruppe der tetravalenten Metalle, z. B. Si, C, Ge, Hf, Zr, Ti darstellen, AX eines, zwei oder mehrere Elemente aus der Gruppe der trivalenten Metalle darstellen, z. B. Al, La, Ga, In, B, und NX eines, zwei oder mehrere Elemente aus der Gruppe O, N, S, C, Cl, F darstellen.

Der Parameterwert a kann dabei zwischen 0,6 und 1,0, bzw. zwischen 0,8 bis 1,0 liegen. Weiterhin kann gelten, dass a < 1 ist.

Gegenstand der vorliegenden Erfindung nach einer weiteren Ausführungsform ist weiterhin ein Leuchtstoff der allgemeinen Formel:

Sr(SrₐM₁₋ₐ)Si₂Al₂(N,X)₆:D,A,B,E,G,L

Wobei eine Co-Dotierung der neuartigen Leuchtstoffe mit den Elementen A, B, E, G und L erfolgt und diese Co-Dotierstoffe entweder Positionen im Wirtsgitter oder Zwischengitterplätze besetzen können. Das allgemeine Element X steht für Elemente wie z. B. O oder Halogen, die insbesondere auch zum Landungsträgerausgleich dienen falls besetzte Zwischengitterplätze im Kristallgitter oder Leerstellen auf Gitterplätzen vorhanden sind.

Dabei ist das Metall M ausgewählt aus Ca, Ba, Mg allein oder in Kombination, A ist ausgewählt aus zweiwertigen Metallen, die unterschiedlich zu M und zu dem weiteren verwendeten Dotierstoff D sind, wie z. B. Cu, Zn oder deren Kombinationen, B steht für dreiwertige Metalle, insbesondere Übergangs- oder Seltenerdmetalle z. B. La oder Pr und E für einwertige Metalle, z. B. Li oder andere Alkalimetalle wie Cs, Rb, K oder Na. G steht für vierwertige Elemente, wie z. B. C oder Ge, oder Hf, Zr, Ti. Das Element L steht dabei für dreiwertige Elemente, wie z. B. B, Ga oder In.

Insbesondere kann dieser Leuchtstoff die folgende allgemeine Formel aufweisen:

Sr(SrₐM₁₋ₐ)Si₂Al₂₍N,O)₆:D,A,B,E,G

Im Folgenden werden anstelle der allgemeinen Formel Sr(SrₐM₁₋ₐ)Si₂Al₂(N,O)₆:D,A,B,E,G die Formeln Sr(SrₐM₁₋ₐ)Si₂Al₂₍N,O)₆:D oder Sr(SrₐM₁₋ₐ)Si₂Al₂(N,O)₆:Eu, Sr(SrₐM₁₋ₐ)Si₂Al₂(N)₆: D oder Sr(SrₐM₁₋ₐ)Si₂Al₂(N)₆:Eu aus Gründen der Einfachheit synonym verwendet.

Die Dotierstoffe können weiterhin spezifische Positionen innerhalb des Kristallgitters der neuartigen Leuchtstoffe wie z. B. Gitterplätze oder Zwischengitterplätze einnehmen und auch vorhandene Elemente in den Leuchtstoffen ersetzen, so dass gemäß einer weiteren Ausführungsform ein Leuchtstoff der folgenden allgemeinen Formel resultiert:

Sr₍₁₋ₓ₋ₕ₎(SrₐM₁₋ₐ)_{(1-y-i)}A_{(x+y)}B_{(h+i)/2}E_{(h+i)/2}Si_{(2-z)}G_{z}Al₂₋ᵥLᵥ(N,X)₆: D

Insbesondere kann die allgemeine Formel folgendermaßen aufgebaut sein:

Sr₍₁₋ₓ₋ₕ₎(SrₐM₁₋ₐ)_{(1-y-i)}A_{(x+y)}B_{(h+i)/2}E_{(h+i)/2}Si_{(2-z)}G_{z}Al₂N₆: D

Wobei das Metall M und die Elemente A, B und E für die gerade oben beschriebenen Elemente stehen und wobei gilt 0 ≤ x+y ≤ 0,4, bevorzugt 0 ≤ x+y ≤ 0,3, weiter bevorzugt 0,04 ≤ x+y ≤ 0,3, x+y können insbesondere 0,2 oder 0,04 sein, weiterhin gilt 0 ≤ h+i ≤ 0,4, bevorzugt 0 ≤ h+i ≤ 0,3, weiter bevorzugt 0,04 ≤ h+i ≤ 0,3, wobei auch kein B vorhanden sein kann, so dass x=0 und y=0 sind. Die Parameter h+i können insbesondere 0,2 oder 0,04 sein, wobei auch kein B und E vorhanden sein können, so dass h=0 und i =0 gilt. Dabei können die zweiwertigen Metalle A und/oder eine Kombination aus gleichen molaren Anteilen der dreiwertigen und einwertigen Metalle B und E Sr und/oder Ca ersetzen. Die Parameter x+y, h+i und z können dabei unabhängig voneinander gewählt werden. Weiterhin können jeweils unabhängig voneinander auch x und y und h und i 0 sein.

G steht für vierwertige Elemente, wie z. B. C oder Ge, die Si ersetzen, wobei für den Parameter z gilt: 0 ≤ z ≤ 1, bzw. 0 ≤ z ≤ 0,5, bzw. 0,02 ≤ z ≤ 0,3, wobei z insbesondere 0,02 oder 0,4 sein kann oder kein vierwertiges Element vorhanden sein kann, so dass z = 0. Der Parameter v für das Element L kann folgende Werte einnehmen: 0 ≤ v ≤ 1, weiterhin 0 ≤ v ≤ 0,5.

Ein Ersatz von Sr und M durch A und/oder ein Ersatz von Sr und M durch eine Kombination aus B und E kann zur Veränderung des Farborts im CIE-Farbraum, zur Veränderung der Dominanzwellenlänge, des Reflexionsvermögens, des visuellen Nutzeffekts Vs, des thermischen Löschungsverhaltens, der Stabilität gegen Strahlung, der Hydrolyseempfindlichkeit und/oder der FWHM des neuartigen Leuchtstoffs führen und somit weitere Möglichkeiten eröffnen die erfindungsgemäßen Leuchtstoffe für spezifische Anwendungen anzupassen.

Ein Ersatz von Si durch G kann weiterhin zu einer starken Verschiebung der Wellenlänge der Emission des Leuchtstoffs führen und kann somit eine Verbessrung des Farbwiedergabeindexes (color rendering index) bewirken, besonders bei der Farbwiedergabe von tiefroten Farben. Die Co-Dotierung mit z. B. Kohlenstoff erhöht somit die Möglichkeiten, bestimmte Farborte zu erreichen.

Weiterhin ist es möglich, dass das vierwertige Element G, z.B. C zum Teil auch die N-Atome in neuartigen Leuchtstoffen ersetzt, wobei G dann als G⁴⁻ vorliegt, so dass die folgenden allgemeinen Strukturformeln resultieren:
Sr(SrₐM₁₋ₐ)Si₂G_{3z}Al₂(N,X)_{6-4z}: D bzw.
Sr(SrₐM₁₋ₐ)Si₂G_{3z}Al₂N_{6-4z}: D.

Bei einer weiteren Ausführungsform des Leuchtstoffs können jeweils x+y, h+i und/oder z = 0 sein, wobei dann folgende allgemeine Formeln resultieren:
Sr(SrₐM₁₋ₐ)Si_{(2-z)}G_{z}Al₂(N,X)₆: D bzw.
Sr(SrₐM₁₋ₐ)Si_{(2-z)}G_{z}Al₂N₆: D

Für x+y = 0 (x = 0 und y = 0) und zusätzlich h+i =0 (h=0 und i =0)
oder die allgemeine Formel:
Sr₍₁₋ₕ₎(SrₐM₁₋ₐ)₍₁₋ᵢ₎B_{(h+i)/2}E_{(h+i)/2}Si₂Al₂(N,X)₆: D bzw.
Sr₍₁₋ₕ₎(SrₐM₁₋ₐ)₍₁₋ᵢ₎B_{(h+i)/2}E_{(h+i)/2}Si₂Al₂N₆: D
resultiert, wenn z = 0 und x+y =0 (x=0 und y =0).

Weiterhin können ausschließlich zweiwertige Metalle A Sr und M ersetzen, also kein B oder E oder G vorhanden sein, so dass folgende allgemeine Formeln resultieren:
Sr₍₁₋ₓ₎(SrₐM₁₋ₐ)_{(1-y)}A_{(x+y)}Si₂Al₂(N,X)₆:D bzw.
Sr₍₁₋ₓ₎(SrₐM₁₋ₐ)_{(1-y)}A_{(x+y)}Si₂Al₂N₆:D

Weiterhin kann M in den obigen Formeln bevorzugt Ca sein.

Eine weitere Ausführungsform eines erfindungsgemäßen Leuchtstoffs weist die folgende allgemeine Formel auf:
Sr₍₁₋ₓ₎(SrₐM₁₋ₐ)_{(1-y)}B_{(x+y)}Si_{2-(x+y)}Al_{2+(x+y)}N₆:D bzw.
Sr₍₁₋ₓ₎(SrₐM₁₋ₐ)_{(1-y)}B_{(x+y)}Si₂-_{(x+y)}Al_{2+(x+y)}N₆:D
so dass Sr und M, sowie Si durch eine Kombination der dreiwertigen Metalle B und Al ersetzt werden, wobei auch hier gilt: 0 ≤ x+y ≤ 0,4, bevorzugt 0,04 ≤ x+y ≤ 0,3, x+y kann insbesondere 0,2 sein.

Alle oben genannten Leuchtstoffe weisen eine starke Absorption in blauen Spektralbereich auf und emittieren rote Sekundärstrahlung. Weiterhin haben diese Leuchtstoffe die gleiche Kristallstruktur wie Sr(SrₐCa₁₋ₐ)Si₂Al₂N₆, kristallisieren also in den Raumgruppen P1, P2, P1̅, insbesondere in der monoklinen Raumgruppe P2₁.

Gegenstand einer weiteren Ausführungsform der vorliegenden Erfindung sind auch Leuchtstoffe der bereits oben beschriebenen allgemeinen Formeln:
Sr₍₁₋ₓ₋ₕ₎(SrₐM₁₋ₐ)_{(1-y-i)}A_{(x+y)}B_{(h+i)/2}E_{(h+i)/2}Si_{(2-z)}G_{z}Al₂N₆:D oder
Sr₍₁₋ₓ₎(SrₐM₁₋ₐ)_{(1-y)}B_{(x+y)}Si₂-_{(x+y)}Al_{2+(x+y)}N₆:D

Wobei D eines, zwei oder mehrere Elemente aus der Gruppe Mn, Ce, Pr, Nd, Sm, Eu, Tb, Dy, Ho, Er, Tm, Alkalimetalle, also Li, Na, K, Rb, Cs, bevorzugt Li und Yb darstellt. D ist bevorzugt ausgewählt aus Eu, Ce, Li, Mn und Kombinationen davon. Bevorzugt ist der Aktivator D ausgewählt aus mindestens einem Element von Eu, Ce, Mn, insbesondere Eu, Ce oder Mn oder eine Mischung aus Eu, Ce, Li. Durch Verwendung der letztgenannten Aktivatoren kann besonders gut der Farbort des Leuchtstoffs im CIE-Farbraum, dessen Dominanzwellenlänge λdom, der visuelle Nutzeffekt Vs, FWHM und die diffuse Reflektivität (Remission) bei 450-470 nm eingestellt werden.

Weiterhin ist insbesondere eine Codotierung von erfindungsgemäßen mit Eu dotierten Leuchtstoffen mit Alkalimetallen, also Li, Na, K, Rb, Cs, bevorzugt Li möglich. Die Codotierung mit den Alkalimetallen kann insbesondere zu einer Verringerung der spektralen Halbwertsbreite FWHM führen, sowie ein verbessertes Verhalten bezüglich des thermischen Quenchens, und eine Verbesserung des visuellen Nutzeffekts bedingen.

Gemäß einer weiteren Ausführungsform der vorliegenden Erfindung ist der Aktivator D eine Kombination aus Eu und einem oder mehreren Alkalimetallen, bevorzugt Li. Dies kann zu einer weiteren Reduzierung der FWHM der emittierten Strahlung, einer Verbesserung des thermischen Quench-Verhaltens und der Quanteneffizienz führen.

Eine allgemeine Formel dieses Leuchtstoffs mit einer Kombination aus Eu und Li kann wie folgt beschrieben werden:
Sr₍₁₋ₓ₋ₕ₎(SrₐM₁₋ₐ)_{(1-y-i)}A_{(x+y)}B_{(h+i)/2}E_{(h+i)/2}Si_{(2-z)}G_{z}Al₂N₆:Eu, Li oder
Sr₍₁₋ₓ₎(SrₐM₁₋ₐ)_{(1-y)}B_{(x+y)}Si₂-_{(x+y)}Al_{2+(x+y)}N₆:Eu,Li

Dabei ist es möglich, dass die Lithium-Metallionen Positionen im Wirtsgitter besetzen und/oder auf Zwischengitterplätzen vorhanden sind. Ein Ladungsträgerausgleich kann dadurch erfolgen dass das Verhältnis Si:Al angepasst wird, und/oder dadurch das partiell N durch O und/oder Halogene wie F ersetzt wird. Möglich sind auch statistisch verteilte Leerstellen innerhalb der Kationen-Gitterplätze. Aus diesem Grunde sind auch die folgenden allgemeinen Formeln geeignet neuartige Leuchtstoffe mit Eu und Li als Aktivatoren zu beschreiben, wobei aus Gründen der Übersichtlichkeit die zusätzlichen Elemente A, B, E, und G nicht gezeigt sind, die aber grundsätzlich vorhanden sein können:
LiⱼSr(SrₐM₁₋ₐ)Si₍₂₋ⱼ₎Al₍₂₊ⱼ₎N₆:Eu
Sr(SrₐM₁₋ₐ)LiⱼSi₍₂₋ⱼ₎Al₍₂₊ⱼ₎N₆:Eu
Li₂ⱼ₊₂ₖ₊₂ₗSr₁₋ⱼ(Srₐ₋ₖM₁₋ₐ₋ₗ)Si₂Al₂N₆:Eu
LiⱼSr₁₋ₖ(SrₐM₁₋ₐ)₁₋ₗSi₂₊ₘAl₂₋ₙN₆:Eu
Liⱼ[Sr(SrₐM₁₋ₐ)]₁₋ⱼSi₂₊ⱼAl₂₋ⱼN₆:Eu

Für den Parameter j gilt dabei: 0 ≤ j ≤ 0,2, bevorzugt 0 ≤ j ≤ 0,15, weiter bevorzugt 0 ≤ j ≤ 0,05.
Gemäß einer weiteren Ausführungsform weist der Leuchtstoff eine allgemeine Summenformel Sr(SrₐM₁₋ₐ)Si₂Al₂N₆:D auf. Dabei ist M Ca und/oder Ba. Außerdem kann M auch ausgewählt sein aus der Gruppe Ca, Ba, Zn, Mg und/oder Li allein oder in Kombination. In diesen Fällen und den oben beschriebenen allgemeinen Formeln kann der Wert von a, bei 0,6 bis 1,0, bevorzugt bei 0,8 bis 1,0 (Randwerte ausgeschlossen) liegen. Insbesondere wird a bei 0,7 bis 0,99, weiter bevorzugt bei 0,85 bis 0,99, Randwerte eingeschlossen, gewählt.

Der Aktivator D kann gemäß einer weiteren Ausführungsform der Erfindung dabei in Mol%-Mengen zwischen 0,1% bis 20 Mol%, bzw. 0,1% und 10%, bzw. 1 Mol% - 10Mol%, bzw. 0,5% bis 5%, 2-5 Mol%, bzw. 0,8% bis 3% vorhanden sein. Hier und im Folgenden werden %-Angaben für den Aktivator, insbesondere Eu, als Mol%-Angaben bezogen auf die Molanteile der Erdalkalimetalle im jeweiligen Leuchtstoff verstanden.

Der Aktivator D kann bevorzugt ausgewählt sein aus den Metallen, Eu, Ce, Mn und Li sowie Kombinationen davon. Weiterhin kann der Aktivator D Eu sein, Mn oder Ce sowie Kombinationen von Eu, Ce und Li.

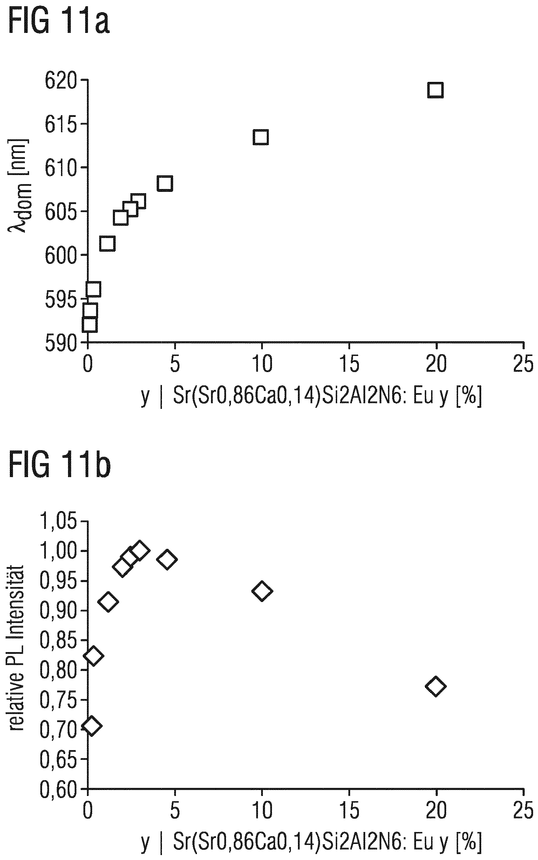

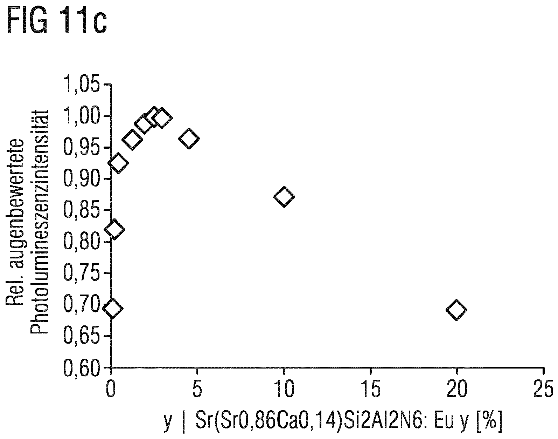

Mit steigender Konzentration an Europium-Dotierstoff verschiebt sich dabei die Dominanzwellenlänge der Emission der neuartigen Leuchtstoffe zu höheren Wellenlängen hin vom orangenen zu roten Farbbereich (siehe Figur 11a), wobei die relative Intensität der Photolumineszenz von 0.1- etwa 4 Mol% ansteigt und dann bei weiter ansteigenden Aktivatorkonzentrationen an Europium wieder abfällt (siehe Figur 11b). Bezogen auf die relative Intensität der Photolumineszenz ist ein Konzentrationsbereich von 1-10 Mol% Eu, bzw. 2-5 Mol% bevorzugt. Weitgehend analog zur relativen Intensität der Photolumineszenz verhält sich auch die relative augenbewertete Photolumineszenzintensität, die ebenfalls mit steigenden Aktivatorkonzentrationen an Europium zunimmt und ab etwa 4 Mol% bis etwa 20 Mol% wieder absinkt (siehe Figur 11c). Bezogen auf die augenbewertete Photolumineszenzintensität sind Aktivatorkonzentrationen von 0,4-10 Mol% Eu, bzw. 1-5 Mol% Europium bevorzugt.

Gemäß zumindest einer Ausführungsform ist der Leuchtstoff zur Emission von rotem oder orangem Licht eingerichtet. Rotes oder oranges Licht bedeutet, dass der Leuchtstoff Strahlung mit einer Dominanzwellenlänge von mindestens 560 nm, bevorzugt zwischen einschließlich 585 nm und 640 nm, insbesondere zwischen einschließlich 590 nm und 615 nm, emittiert.

Es ist die Dominanzwellenlänge insbesondere diejenige Wellenlänge, die sich als Schnittpunkt der Spektralfarblinie der CIE-Normfarbtafel mit einer geraden Linie ergibt, wobei diese gerade Linie, ausgehend vom Weißpunkt in der CIE-Normfarbtafel, durch den tatsächlichen Farbort der Strahlung verläuft. Im Allgemeinen weicht die Dominanzwellenlänge von einer Wellenlänge maximaler Intensität ab. Insbesondere liegt die Dominanzwellenlänge im roten Spektralbereich bei kleineren Wellenlängen als die Wellenlänge maximaler Intensität.

Gemäß zumindest einer Ausführungsform weist der Leuchtstoff eine allgemeine Summenformel Sr(SrₐCa₁₋ₐ)Si₂Al₂N₆:D auf. Dabei ist D mindestens ein Aktivierungselement. Häufig ist D von Element Eu und/oder auch Ce gebildet. Andere oder zusätzliche Aktivierungselemente oder Dotierungen können aus der Gruppe Mn, Ce, Pr, Nd, Sm, Eu, Gd, Tb, Dy, Ho, Er, Tm, Yb, und Lu jeweils allein oder in Kombination ausgewählt sein. Es ist möglich, dass der Leuchtstoff weitere Elemente, etwa in Form von Verunreinigungen aufweist, wobei diese Verunreinigungen zusammen genommen bevorzugt höchstens einen Gewichtsanteil an dem Leuchtstoff von höchstens 0,1 Promille oder 100 ppm oder 10 ppm, parts per million, aufweisen sollten.

Die Synthese und weitere Eigenschaften des neuartigen roten Leuchtstoffs sind in der anhängigen PCT-Patentanmeldung PCT/EP 2014/071544 beschrieben, auf die hiermit vollinhaltlich Bezug genommen wird.

In mindestens einer Ausführungsform weist das Verfahren mindestens die folgenden Schritte auf, bevorzugt in der angegebenen Reihenfolge:
A) Bereitstellen von als Festkörper vorliegenden Edukten für Sr, Al, Si und Eu sowie optional für Ca,
B) Mischen der Edukte,
C) Erhitzen der Edukte unter Inertgasatmosphäre, insbesondere Stickstoffatmosphäre oder unter Formiergasatmosphäre auf mindestens 1.500°C und Formen eines Glühkuchens, und
D) Zerkleinern des Glühkuchens zu dem Leuchtstoff

Gemäß zumindest einer Ausführungsform des Verfahrens erfolgt zumindest der Schritt C) oder auch alle Schritte bei etwa Atmosphärendruck. Insbesondere erfolgt das Verfahren dann nicht unter Hochdruckbedingungen. Bevorzugt liegt der Atmosphärendruck und/oder ein Gesamtdruck zwischen einschließlich 0,9 bar und 1,5 bar oder 0,95 bar und 1,05 bar.

Als Edukt und als Quelle für Strontium, Aluminium und/oder Kalzium können die jeweiligen reinen Metalle oder auch Metalllegierungen mit den entsprechenden Metallen Verwendung finden. Ebenso können als Edukte eingesetzt werden Silicide, Hydride, Nitride, Oxinitride, Halogenide und/oder Oxide dieser Metalle. Weiterhin können Mischungen dieser Verbindungen verwendet werden.

Als Edukt oder Quelle für Silicium für die Herstellung des Leuchtstoffs kann eine Silizium-Metallverbindung, ein Siliziumnitrid, ein Erdalkalisilicid, Siliziumdiimid oder eine Mischung dieser Verbindungen eingesetzt werden. Bevorzugt werden Siliziumnitride und/oder Siliziummetalle eingesetzt.

Als Edukt oder Quelle für Eu kann metallisches Europium, eine Europiumlegierung, ein Europiumoxid, ein Europiumnitrid, Europiumhydrid oder ein Europiumhalogenid dienen. Ebenso können Mischungen dieser Verbindungen eingesetzt werden. Bevorzugt wird Europiumoxid als Edukt für Europium verwendet.

Als Edukte für die weiteren vierwertigen Elemente G, z. B. C, die dreiwertigen Elemente B, z. B. La, die einwertigen Elemente E, z. B. Li und die zweiwertigen Elemente A anders als D und M, z.B. Cu oder Zn können beispielsweise die entsprechenden Elemente, Silicide, Hydride, Nitride, Oxinitride, Carbonate, Hydroxide, Halogenide und/oder Oxide dieser Elemente und davon abgeleitete Verbindungen, wie z. B. Hydrate verwendet werden. Beispielsweise können Mn₂O₃, CuO, Zn₃N₂, La₂O₃, Li₂B₄O₇ und Graphit verwendet werden.

Gemäß zumindest einer Ausführungsform werden ein Schmelzmittel und/oder ein Flussmittel für die Verbesserung der Kristallinität und/oder zur Unterstützung des Kristallwachstums eingesetzt. Hierzu werden bevorzugt Chloride, Fluoride, Halogenide und/oder borhaltige Verbindungen der eingesetzten Erdalkalimetalle herangezogen werden. Auch Kombinationen aus zwei oder mehreren Schmelzmitteln oder Flussmitteln können Verwendung finden. Insbesondere dient als Schmelzmittel und/oder als Flussmittel zB. zumindest einer der folgenden Stoffe: LiF, LiCl, NaF, NaCl, SrCl₂, SrF₂, CaCl₂, CaF₂, BaCl₂, BaF₂, NH₄Cl, NH₄F, KF, KCl, MgF₂, MgCl₂, AlF₃, H₃BO₃, B₂O₃, Li₂B₄O₇, NaBO₂, Na₂B₄O₇, LiBF4. Auch NH₄HF₂, NaBF₄, KBF₄, EuF₃ und davon abgeleitete Verbindungen wie z. B. Hydrate sind geeignet.

Gemäß zumindest einer Ausführungsform werden die Ausgangssubstanzen, insbesondere für Sr, Ca, Al und/oder Si sowie Eu und gegebenenfalls auch für die weiteren vierwertigen Elemente G, z. B. C, die dreiwertigen Elemente B, z. B. La, die einwertigen Elemente E, z. B. Li und die zweiwertigen Elemente A anders als D und M, z.B. Cu oder Zn, gemäß der allgemeinen Summenformel des Leuchtstoffs eingewogen. Es ist möglich, das die Erdalkalikomponenten Sr, Ca auch mit einem Überschuss eingewogen werden, um eventuell auftretende Abdampfungsverluste während der Synthese zu kompensieren. Außerdem ist auch die Anwendung von Ba als Erdalkalikomponente möglich.
Gemäß zumindest einer Ausführungsform folgt dem Schritt D) ein Schritt E) nach. In dem Schritt E) erfolgt ein weiteres Glühen des Leuchtstoffs, auch als Tempern bezeichenbar. Das Glühen erfolgt insbesondere bei einer Temperatur von mindestens 1500 °C und bevorzugt unter Stickstoffatmosphäre oder Formiergasatmosphäre. Formiergas bezeichnet eine Mischung aus N₂ und H₂. Die Temperatur von mindestens 1500 °C in den Schritten C) und/oder E) liegt bevorzugt für mindestens vier Stunden oder sechs Stunden an. Beispielsweise liegt in den Schritten C) und E) jeweils eine Temperatur von 1650 °C ± 50 °C an.

Gemäß einer alternativen Ausführungsform eines erfindungsgemäßen Verfahrens zur Herstellung eines solchen Leuchtstoffs können anstelle des Schrittes E) auch die Schritte C) und D) wiederholt werden.

Gemäß zumindest einer Ausführungsform erfolgt ein Mischen der Edukte in einer Kugelmühle oder in einem Taumelmischer. Beim Mischprozess kann es von Vorteil sein, die Bedingungen so zu wählen, dass viel Energie in das Mischgut eingetragen wird, wodurch es zu einer Vermahlung der Edukte kommt. Die damit erhöhte Homogenität und Reaktivität der Mischung kann einen positiven Einfluss auf die Eigenschaften des resultierenden Leuchtstoffs haben.

Durch gezielte Veränderung der Schüttdichte oder durch Modifikation der Agglomeration der Eduktmischung kann die Entstehung von Nebenphasen reduziert werden. Außerdem können eine Partikelgrößenverteilung, eine Partikelmorphologie und/oder eine Ausbeute des resultierenden Leuchtstoffs beeinflusst werden. Hierfür besonders geeignete Techniken sind Siebungen und Granulieren, auch unter Verwendung geeigneter Zusätze.

Gemäß zumindest einer Ausführungsform erfolgt eine Temperung, insbesondere in einem Tiegel aus Wolfram, Molybdän oder Bornitrid. Die Temperung erfolgt bevorzugt in einem gasdichten Ofen in einer Stickstoff-Atmosphäre oder in einer Stickstoff/Wasserstoff-Atmosphäre. Die Atmosphäre kann fließen oder stationär sein. Es kann zudem Kohlenstoff in feinverteilter Form im Ofenraum anwesend sein. Es sind auch mehrfache Temperungen des Leuchtstoffs möglich, um die Kristallinität oder die Korngrößenverteilung zu verbessern oder gezielt zu beeinflussen. Weitere Vorteile können eine niedrigere Defektdichte, verbunden mit verbesserten optischen Eigenschaften des Leuchtstoffs und/oder eine höhere Stabilität des Leuchtstoffs, sein. Zwischen den Temperungen kann der Leuchtstoff auf verschiedenste Weisen behandelt werden oder es können dem Leuchtstoff Substanzen wie Schmelzmittel zugegeben werden.

Für ein Mahlen des Leuchtstoffs können etwa eine Mörsermühle, eine Fließbettmühle oder eine Kugelmühle eingesetzt werden. Es ist beim Mahlen bevorzugt darauf zu achten, den Anteil von erzeugtem Splitterkorn möglichst gering zu halten, da dieser die optischen Eigenschaften des Leuchtstoffs verschlechtern kann.

Der Leuchtstoff kann zusätzlich gewaschen werden. Hierzu kann der Leuchtstoff in Wasser oder in wässrigen Säuren wie Salzsäure, Salpetersäure, Flusssäure, Schwefelsäure, organischen Säuren oder einer Mischung dieser gewaschen werden. Der Leuchtstoff kann alternativ oder zusätzlich in einer Lauge wie Natronlauge, Kalilauge, einer wässrigen Ammoniak-Lösung oder Mischungen hieraus gewaschen werden. Alternativ oder zusätzlich ist eine Waschung in organischen Lösungsmitteln wie Aceton, Propanol und/oder Phenol möglich. Das Waschen erfolgt bevorzugt nach dem Mahlen.

Gemäß zumindest einer Ausführungsform erfolgt etwa durch das Tempern, weitere Glühen, Mahlen, Sieben und/oder Waschen eine Entfernung von Nebenphasen, Glasphasen oder andere Verunreinigung und damit eine Verbesserung der optischen Eigenschaften des Leuchtstoffs.

Ein Ausführungsbeispiel eines hier beschriebenen Leuchtstoffs lässt sich wie folgt herstellen:
Als Edukte für die Synthese des Leuchtstoffs der allgemeinen Summenformel Sr(SrₐCa₁₋ₐ)Si₂Al₂N₆:Eu werden die binären Nitride der konstituierenden Elemente, also Ca₃N₂, Sr₃N₂, AlN und Si₃N₄ eingesetzt. Da es sich dabei um stark oxidationsempfindliche und hydrolyseempfindliche Substanzen handelt, wird in einer sogenannten Glove-Box gearbeitet, unter einer N₂-Atmosphäre mit O₂ < 1 ppm und H₂O < 1 ppm. Zusätzlich wird zur Dotierung mit Eu²⁺ Eu₂O₃ eingesetzt. Eine Einwaage erfolgt so, dass quasi in vereinfachender Darstellung folgendes atomares Verhältnis vorliegt: Sr : Ca : Si : Al : Eu = (1+a) : (1-a) : 2 : 2 : y, wobei y dem Dotierungsgrad entspricht, also dem Anteil der zweiwertigen Gitterplätze, die durch Eu substituiert werden. Zusätzlich werden verschiedene Flussmittel hinzugefügt, siehe die obige Erläuterung. Eine Eduktmischung wird unter Beibehaltung der oben beschriebenen atomaren Verhältnisse beispielsweise auf eine Gesamteinwaage von 50 - 100 g skaliert. Es ist auch möglich andere Gesamteinwaagen zu verwenden.

Die Eduktmischung wird beispielsweise zusammen mit ZrO₂-Kugeln in einen PET-Mischbehälter gegeben und für 6 h auf einer Rollenbank in der Glove-Box gemischt. Anschließend werden die Kugeln aus der Mischung entfernt und das Pulver wird in einen geschlossenen Molybdän-Tiegel überführt. Dieser Tiegel wird in einen Wolfram-Übertiegel, ein halbrundes offenes Rohr aus Wolfram, gelegt und in einen Rohrofen überführt. Der Rohrofen wird während der Laufzeit mit 3 l/min Formiergas mit 92,5% N₂ und 7,5% H₂ durchströmt. In dem Rohrofen wird die Mischung mit einer Rate von 250 K/h auf 1650 °C erhitzt, bei dieser Temperatur für 4 h gehalten und anschließend mit 250 K/h auf 50 °C abgekühlt. Der entstandene Glühkuchen wird nach Erkalten des Ofens herausgenommen, mit einer Mörser-Mühle zerkleinert und über ein Sieb mit einer Maschenweite von 31 µm gesiebt. Die Siebfraktion < 31 µm ist der verwendete Leuchtstoff.

Dem Sieben kann optional ein weiteres Glühen, Tempern und/oder Waschen und/oder ein Beschichtungsvorgang nachfolgen.

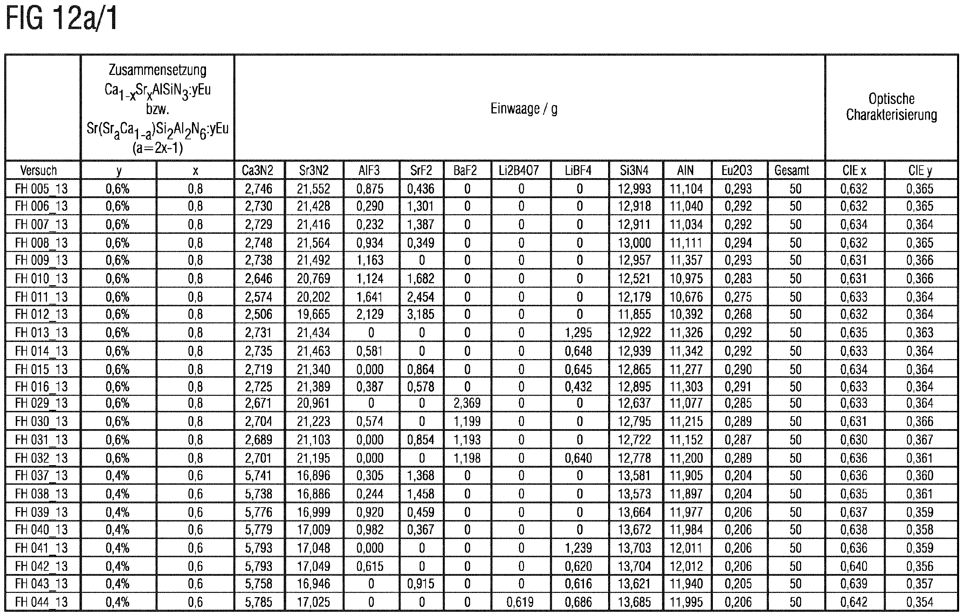

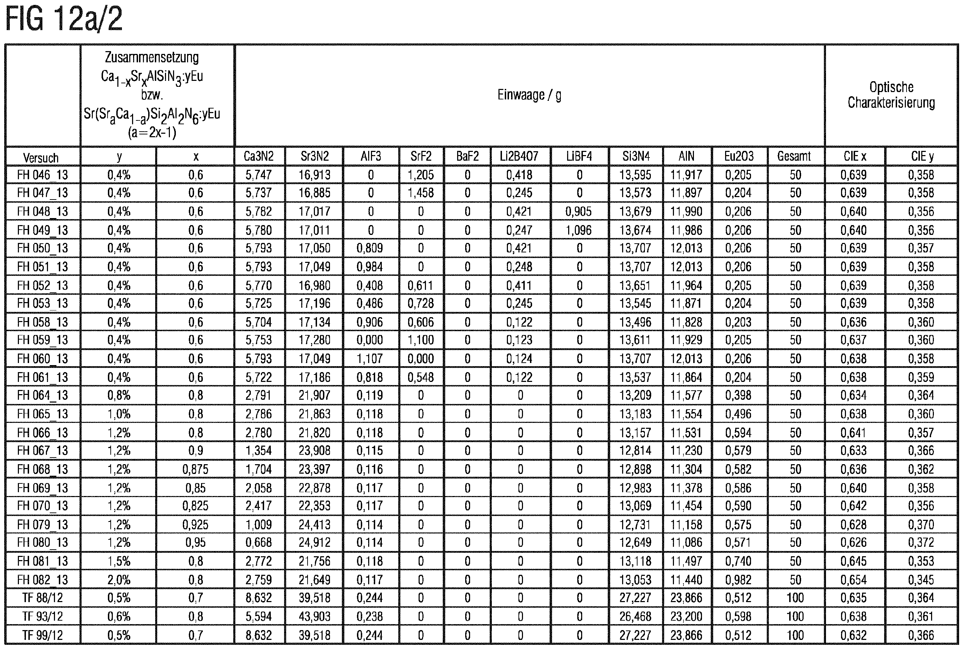

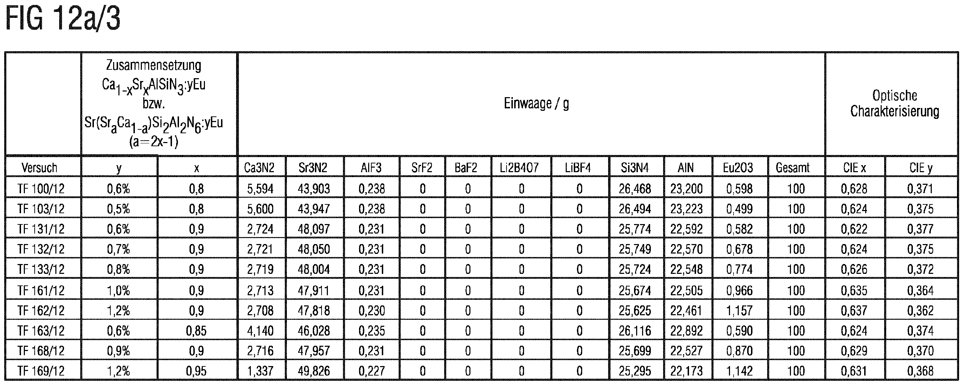

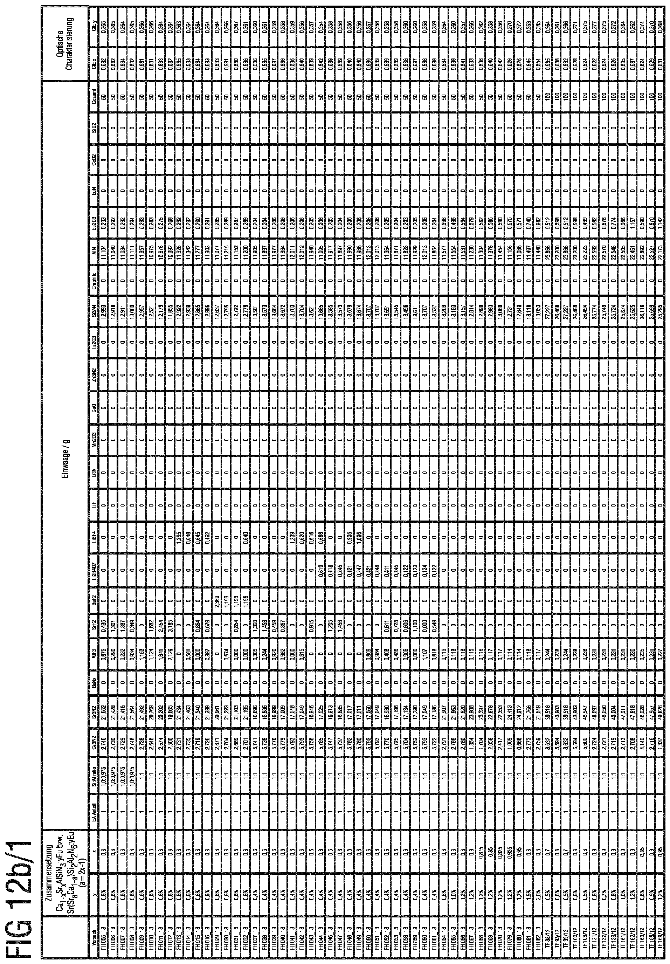

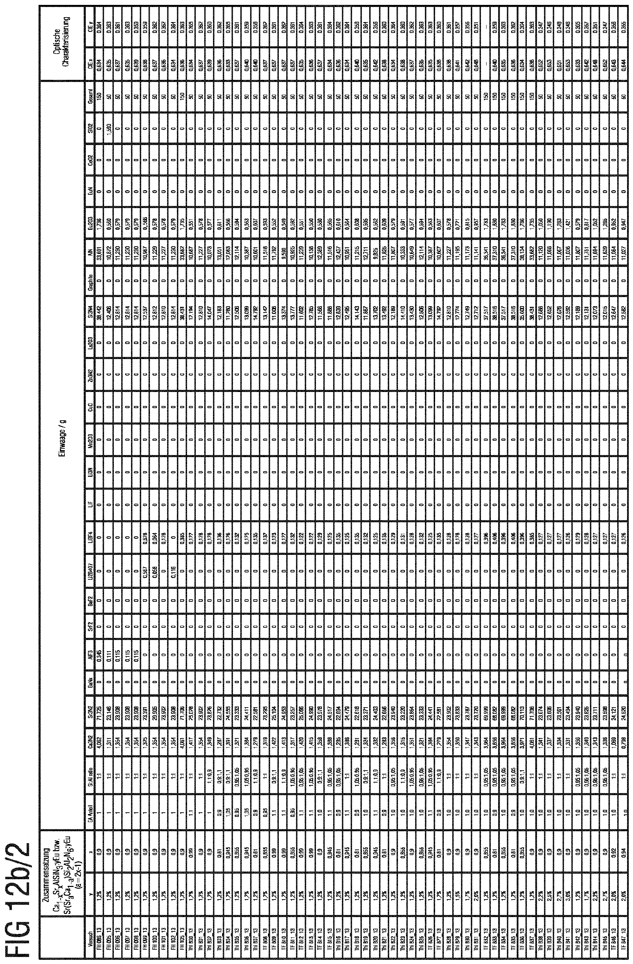

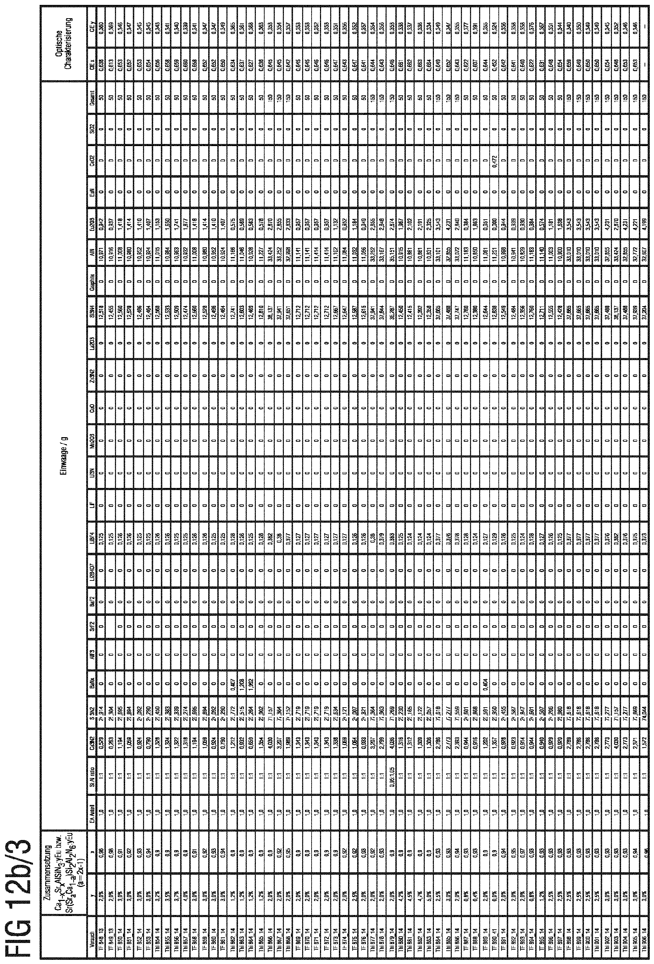

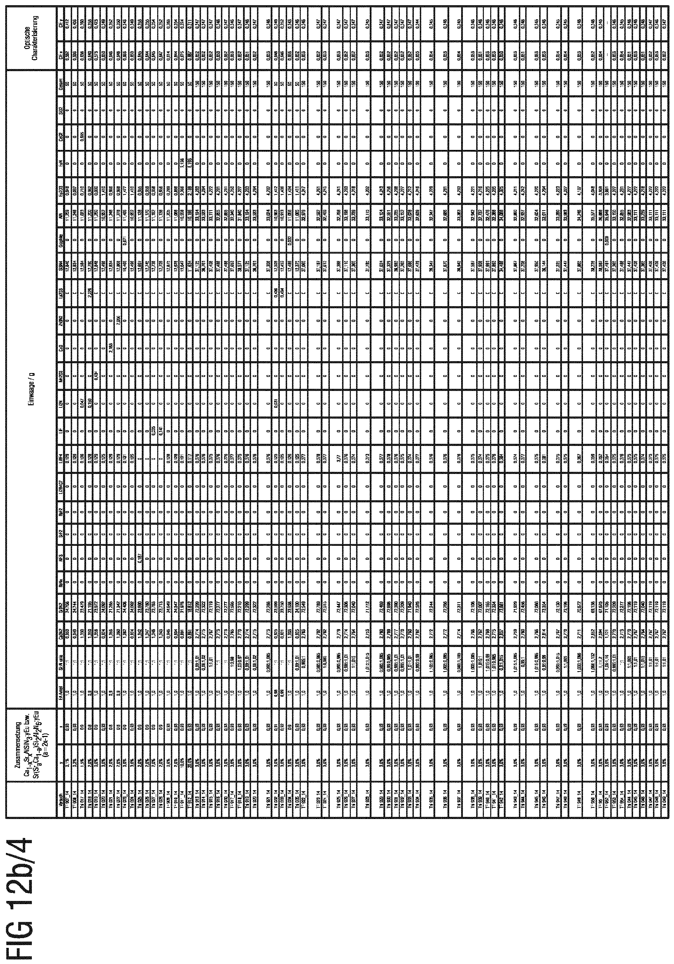

Beispielhafte Einwaagen m in g sowie resultierende Farborte CIE x, CIE y, auch als color locus oder "chromaticity coordinate" bezeichnet, des Emissionsspektrums des jeweiligen Leuchtstoffs in der CIE-Normfarbtafel bei Anregung mit blauem Licht bei 460 nm und bei vollständiger Absorption des blauen Lichts sind tabellarisch in den Figuren 12a und 12b aufgeführt. Einwaagen mit x ≤ 0,8 bezeichnen dabei herkömmliche CaAlSiN₃-Leuchtstoffe, während Einwaagen mit x > 0,8 (entspricht a > 0,6) die neuartigen Leuchtstoffe kennzeichnen.

Im Folgenden sollen Ausführungsformen der vorliegenden Erfindung anhand von konkreten Beispielen und Figuren näher erläutert werden.

Es zeigen:
- Figur 1: zeigt eine schematische Zeichnung eines Leuchtstoffpartikels mit Schutzschicht,
- Figur 2: zeigt eine graphische Entwicklung der pH-Werte während verschiedener erfindungsgemäßer und herkömmlicher Methoden zur Erzeugung einer Schutzschicht in Abhängigkeit von der Reaktionszeit,
- Figur 3: zeigt die relative Absorption von Leuchtstoffpartikeln mit Schutzschichten im Rahmen eines Stabilitätstests in Bezug auf den pH-Wert während des Säurebehandlungsschritts A),
- Figur 4: zeigt die Stabilität von verschiedenen Leuchtstoffen, die mittels erfindungsgemäßer Verfahren behandelt und unterschiedlichen Temperaturen im Schritt B) unterzogen wurden als relative Absorption bei 440 bis 460 nm in Abhängigkeit von der Zeitdauer eines Stabilitätstests,
- Figur 5: zeigt die relative Absorption und damit die Stabilität von verschiedenen mit Schutzschichten versehenen Leuchtstoffen in Abhängigkeit von der Zeitdauer eines Stabilitätstests,
- Figur 6: zeigt die relative Ausbeute an Leuchtstoff mit Schutzschicht in Abhängigkeit von pH-Wert während des Säurebehandlungsschrittes A),
- Figur 7: zeigt die mittels Röntgenfotoelektronenspektroskopie (XPS) bestimmte chemische Zusammensetzung eines mittels eines erfindungsgemäßen Verfahrens mit einer Schutzschicht versehenen Leuchtstoffpartikels im Vergleich zu einem Leuchtstoffpartikel ohne Schutzschicht,
- Figur 8: zeigt eine grafische Darstellung der Veränderung der relativen Konzentrationen der Elemente Aluminium, Silizium, Stickstoff und der Summe aller Erdalkalielemente für einen oberflächenbehandelten Leuchtstoffpartikel gemäß der vorliegenden Erfindung im Vergleich zu einem unbeschichteten Leuchtstoff,
- Figur 9: zeigt das Verhältnis der Oberflächenkonzentrationen der Gesamtheit der Erdalkali-Ionen (Ca, Sr, Ba) im Vergleich zu der gesamten Anzahl an Aluminium- und Silizium-Ionen für eine unbeschichtete und beschichtete Probe eines erfindungsgemäßen Leuchtstoffs.

In Figur 10 ist die relative Absorption von Leuchtstoffpartikeln mit unterschiedlichen erfindungsgemäßen Schutzschichten und unbeschichteten Partikeln nach einem Stabilitätstest aufgetragen.

Die Figuren 11a bis 11c zeigen die Auswirkungen von unterschiedlichen Eu-Dotierstoffkonzentrationen auf die Dominanzwellenlänge, die relative Intensität der Photolumineszenz und die relative augenbewertete Photolumineszenzintensität für einen neuartigen Leuchtstoff, der mit der erfindungsgemäßen Schutzschicht versehen werden kann.

Die Figuren 12a und 12b zeigen Einwaagen m in Gramm für verschiedene Edukte zur Herstellung von bevorzugt mit einer Schutzschicht zu beschichtenden neuartigen Leuchtstoffen.

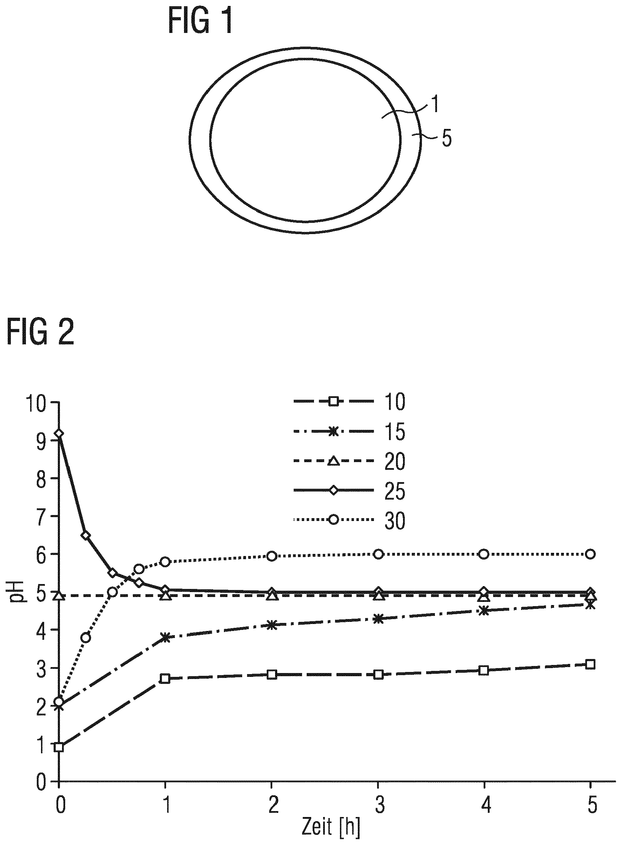

Figur 1 zeigt schematisch einen Leuchtstoffpartikel 1 mit einer mittels eines erfindungsgemäßen Verfahren erzeugten Schutzschicht 5, die insbesondere durch einen Säurebehandlungsschritt A) mit anschließenden Temperschritt B) aus Oberflächenbereichen des Leuchtstoffpartikels und/oder im Leuchtstoff zusätzlich enthaltenen Nebenphasen erzeugt werden kann. Bevorzugt ist dabei die Schutzschicht 5 durchgängig auf allen Oberflächenbereichen des Leuchtstoffpartikels 1 vorhanden, so dass ein besonders guter Schutz gegenüber Umgebungseinflüssen, wie Feuchtigkeit resultiert.

Alle im Folgenden in den Figuren 2 bis 11 gezeigten experimentellen Daten beziehen sich auf neuartige rot oder orange emittierende Leuchtstoffe der allgemeinen Formel Sr(SrₐM₁₋ₐ)Si₂Al₂N₆:D wobei M ausgewählt ist aus der Gruppe Ca, Ba, Zn, Mg und D ausgewählt ist aus Eu und Ce.

Figur 2 zeigt den Verlauf des pH-Werts von Suspensionen von rot emittierenden Leuchtstoffen der allgemeinen Formel Sr(SrₐM₁₋ₐ)Si₂Al₂N₆:D mit M ausgewählt aus Calcium, Barium, Zink, Magnesium und D ausgewählt aus Eu und Ce in Abhängigkeit von dem Zeitraum der Säurebehandlung und der Art und Weise der Säurezugabe im Verfahrensschritt A).

Die mit dem Bezugszeichen 10 versehene Kurve zeigt dabei den pH-Verlauf eines herkömmlichen Verfahrens zur Herstellung einer Schutzschicht, bei dem ein großer Überschuss an Säure zugegeben wird und dementsprechend über einen längeren Zeitraum von zumindest vier Stunden der pH-Wert sich unterhalb von pH 3 befindet.

Die mit dem Bezugszeichen 15 versehene Kurve zeigt den Verlauf des pH-Wertes bei einer Variante eines erfindungsgemäßen Verfahrens, bei dem in Abhängigkeit vom Leuchtstoff eine vorbestimmte Menge an Säurelösung zur pH-Kontrolle dazugegeben wird. Deutlich ist an dieser Kurve zu erkennen, dass nach anfänglicher Zugabe die Suspension aus der Säurelösung und den Leuchtstoffpartikeln sehr sauer ist, der pH-Wert aber langsam von einem anfänglichen Wert von pH 2 mit beginnender Hydrolyse der Oberfläche der Leuchtstoffpartikel auf etwa pH 3,7 ansteigt und sich danach etwa für vier Stunden in einem Bereich zwischen pH 3,7 und pH 4,2 bewegt.

Die mit dem Bezugszeichen 20 versehene Kurve zeigt den pH-Verlauf bei einer weiteren Variante eines erfindungsgemäßen Verfahrens, bei dem eine Pufferlösung eingesetzt wird. Aufgrund der Pufferlösung bewegt sich der pH während des gesamten Verlaufs der Säurebehandlung für über fünf Stunden unterhalb eines pH-Werts von etwa knapp 5.

Die mit den Bezugszeichen 25 und 30 versehenen Kurven zeigen den pH-Verlauf bei weiteren Ausführungsformen eines erfindungsgemäßen Verfahrens, bei dem eine Säurelösung in Abhängigkeit vom gemessenen pH-Wert der Säurelösung zugegeben wird. Bei der mit dem Bezugszeichen 30 versehen Kurve wird dabei ein Startvolumen an Säure zugegeben; im weiteren Verlauf wird soviel Säure zudosiert, dass eine definierte pH-Wert-Obergrenze (hier pH = 6) nicht überschritten wird. In der mit den Bezugszeichen 25 versehenen Kurve führt nach Suspendieren des Leuchtstoffs ohne Zugabe von Säure die Hydrolyse des Leuchtstoffs zuerst zu (leicht) alkalischen Bedingungen und erst nach Zudosieren von Säure wird der pH Wert auf einen Wert um 5 eingestellt.

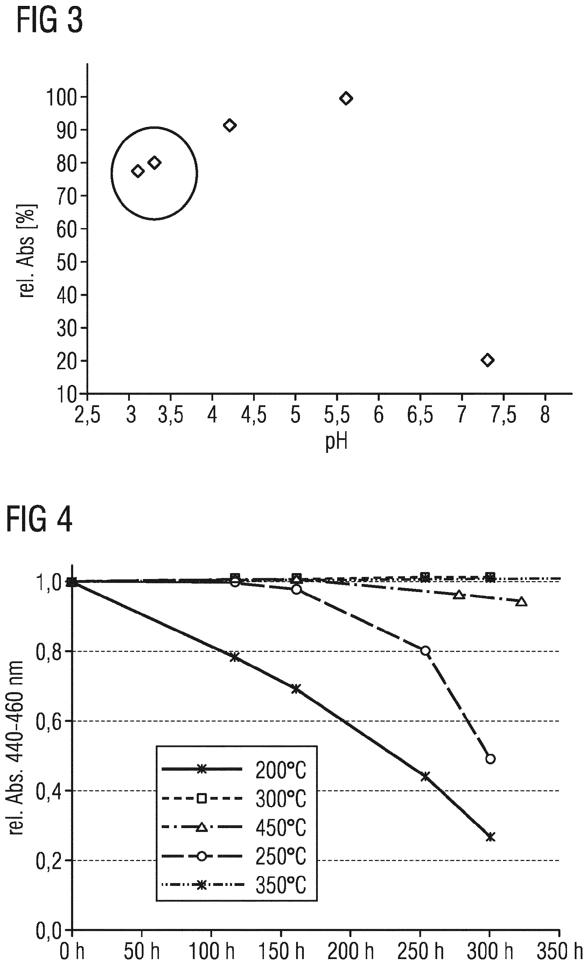

Figur 3 zeigt eine Korrelation zwischen dem pH-Wert bei dem Säurebehandlungsschritt A) im Vergleich zur Hydrolysestabilität der aus dem Verfahren resultierenden Leuchtstoffpartikel mit der Schutzschicht. Die Stabilität wird dabei hier und auch bei den experimentellen Daten der folgenden Figuren mittels eines beschleunigten Degradationstests ("PCT" Pressure Cooker Test) beurteilt, bei dem Leuchtstoffpartikel in einer Silikonmatrix bei 100% relativer Luftfeuchtigkeit und einer Temperatur von 121° C gehalten werden. Die Stabilität der Partikel wird dann anhand der Abnahme der relativen Absorptionswerte der Leuchtstoffe im Vergleich zu einem Absorptionswert bestimmt, der gemessen wurde, bevor der Degradationstest gestartet wurde. Der Degradationstest wird dabei für 1100 Stunden durchgeführt.

Auf der x-Achse ist der während eines 5-stündigen Säurebehandlungsschritts A) gemessene pH-Wert aufgetragen, während auf der y-Achse die relative Absorption der Leuchtstoffpartikel nach dem PCT-Test aufgetragen ist.

Deutlich ist zu erkennen, dass Leuchtstoffpartikel, die für fünf Stunden bei pH-Werten zwischen 4 und 5,5 behandelt wurden, eine sehr gute Stabilität aufweisen, wobei bei einem pH-Wert zwischen 5 bis 6, etwa bei 5,5 die Stabilität am größten ist. Die mit einem Kreis markierten Messpunkte zeigen dabei Leuchtstoffpartikel, die für fünf Stunden einem sehr niedrigen pH von unter 3,5 ausgesetzt wurden und die somit mit herkömmlichen Verfahren zur Erzeugung einer Schutzschicht behandelt wurden, bei denen ein Überschuss an Säure eingesetzt wurde. Diese Leuchtstoffpartikel weisen eine verminderte Stabilität im Vergleich zu den Leuchtstoffen, die zwischen pH-Werten von 4 bis 6 behandelt wurden, auf. Ebenfalls ist zu erkennen, dass bei höheren pH-Werten die im neutralen beziehungsweise leicht basischen Milieu liegen, eine drastische Verringerung der Stabilität beobachtet werden kann.

Eine Abnahme der relativen Absorption ist dabei auf eine Hydrolyse der Leuchtstoffpartikel während des Degradationstests und damit auf eine verminderte Stabilität zurückzuführen. Im bevorzugten pH-Bereich von etwa 4 bis 6,5, weiter bevorzugt 4,5 bis 6, findet eine kontrollierte Hydrolyse auf der Oberfläche der Leuchtstoffpartikel statt, wobei insbesondere leicht lösliche Hydroxide der Erdalkalimetalle Sr, Ba und Ca gebildet werden, die sich schnell in der Säurelösung auflösen, während die Hydroxide von Si und Al relativ stabil bei diesem pH-Wert sind. Dementsprechend wird eine selektive Eliminierung der Elemente, insbesondere der Erdalkalimetalle auf der Oberfläche der Leuchtstoffpartikel erreicht. Bei höheren und bei niedrigeren pH-Werten im Vergleich zum bevorzugten pH-Bereich nimmt die Löslichkeit der Hydroxide von Silizium und Aluminium zu, mit der Folge, dass keine oder eine nur unzureichende Schutzschicht ausgebildet wird.

Figur 4 zeigt die Abhängigkeit zwischen der relativen Absorption von Leuchtstoffen, die verschiedenen Temperaturen im Temperschritt B) ausgesetzt wurden und der Zeitdauer die die jeweiligen Leuchtstoffe dem PCT-Test unterzogen werden. Alle fünf gezeigten Proben wurden einem vergleichbaren Säurebehandlungsschritt A) unterzogen, gewaschen und getrocknet. Danach wurden die Proben den in der Abbildung bezeichneten unterschiedlichen Tempertemperaturen im Schritt B) unterzogen.

Auf der y-Achse ist dabei die relative Absorption zwischen 440 und 460 nm der Leuchtstoffe mit den Schutzschichten aufgetragen. Deutlich ist zu erkennen, dass die Leuchtstoffe, deren Schutzschichten in einem erfindungsgemäßen Temperschritt B) bei Temperaturen zwischen 300 und 350°C erzeugt wurden, am stabilsten sind, da deren relative Absorption über einen Zeitraum von 300 Stunden im PCT-Test kaum abnimmt. Im Gegensatz dazu sind Leuchtstoffe, deren Schutzschichten bei einer Temperatur von 200° C oder 250° C gebildet werden, wesentlich weniger stabil, da deren relative Absorption über einen Zeitraum von 300 Stunden wesentlich stärker abnimmt. Die sich auf eine Tempertemperatur von 450°C beziehende Kurve zeigt auch, dass bei dieser Tempertemperatur die Stabilität der Leuchtstoffpartikel wieder etwas abnimmt, da die Temperatur bereits zu hoch ist.

Diese Daten zeigen deutlich, dass unterhalb einer Tempertemperatur von 300° C bzw. oberhalb von 350° C die Leuchtstoffpartikel weiterhin empfindlich gegenüber Hydrolyse sind. Während des Temperschritts B) können insbesondere die im Verfahrensschritt A), der Hydrolyse gebildeten Hydroxide von Silizium und Aluminium durch die Eliminierung von Wasser quervernetzt werden.

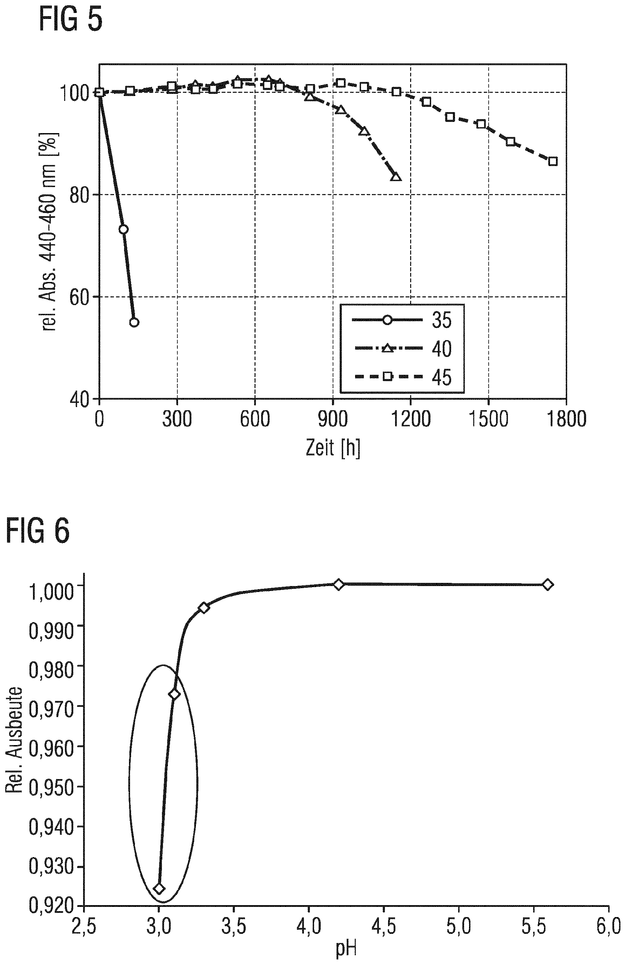

Figur 5 zeigt unterschiedliche Stabilitäten für Leuchtstoffe mit und ohne Schutzschicht bestimmt anhand der relativen Absorption in Abhängigkeit der Zeitdauer, der die Leuchtstoffe dem PCT-Test ausgesetzt waren. Auf der x-Achse ist die Zeitdauer des PCT-Tests aufgetragen und auf der y-Achse die relative Absorption zwischen 440 und 460 nm für die verschiedenen Leuchtstoffe.

Die mit den Bezugszeichen 35 versehene Kurve zeigt dabei den Verlauf der relativen Absorption für einen Leuchtstoff ohne Schutzschicht, wobei eine sehr geringe Stabilität des Leuchtstoffs aufgrund der schnell abnehmenden relativen Absorption zu beobachten ist. Die mit den Bezugszeichen 40 versehene Kurve zeigt dabei einen Leuchtstoff mit einer Schutzschicht, die gemäß eines herkömmlichen Verfahrens mit einem Überschuss an Säure erzeugt wurde, während die mit den Bezugszeichen 45 versehene Kurve einen Leuchtstoff zeigt, deren Schutzschicht mittels eines erfindungsgemäßen Verfahrens erzeugt wurde, wobei eine angepasste Menge an Säure in Abhängigkeit vom pH-Wert zugegeben wurde.

Wieder ist deutlich zu erkennen, dass ein Leuchtstoff, dessen Schutzschicht mittels eines erfindungsgemäßen Verfahrens erzeugt wurde, sogar im Vergleich zu Leuchtstoffen mit anderen herkömmlichen Schutzschichten eine erhöhte Stabilität aufweist.

Figur 6 zeigt die relative Ausbeute von verschiedenen Verfahren zur Erzeugung von Schutzschichten auf Leuchtstoffpartikeln in Abhängigkeit von den pH-Werten während des Säurebehandlungsschrittes. Auf der x-Achse ist dabei der pH-Wert während eines Säurebehandlungsschritts aufgetragen, wobei die Säurebehandlung für fünf Stunden durchgeführt wurde. Deutlich ist zu erkennen, dass bei Säurebehandlungsschritten mit pH-Werten zwischen 3,5 bis 5,5, also erfindungsgemäßen Verfahren, sehr gute relative Ausbeuten erzielt werden, während bei Verfahren, bei denen ein Überschuss an Säure vorhanden ist (markiert mit der Ellipse), eine reduzierte relative Ausbeute resultiert.

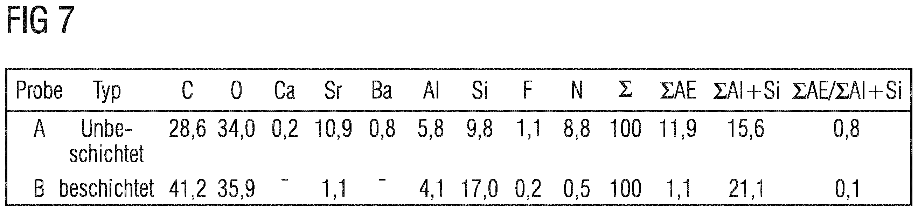

Figur 7 zeigt die mittels einer Röntgenphotoelektronenspektroskopie (XPS/Auger) ermittelte chemische Zusammensetzung von den Oberflächen von Leuchtstoffpartikeln, die entweder eine Schutzschicht aufweisen oder unbeschichtet sind. Probe A enthält dabei keine Schutzschicht und wurde lediglich als Referenz gemessen. Im Gegensatz dazu wurde Probe B mittels eines erfindungsgemäßen Verfahrens mit einer Schutzschicht versehen. Deutlich ist zu erkennen, dass die Mengen (in Atomprozent) an Silizium auf der Oberfläche der beschichteten Leuchtstoffpartikel deutlich zunehmen, während die Anteile an Aluminium nur leicht zurückgehen. Im Gegensatz dazu nehmen die Erdalkalianteile der drei Ionen Calcium, Strontium und Barium bei Erzeugung einer Schutzschicht auf der Oberfläche der Leuchtstoffpartikel deutlich ab. Ebenso deutlich ist die Abnahme der Menge an Stickstoff auf der Oberfläche der Leuchtstoffpartikel. Weiterhin wurden in der Tabelle noch die Summen für die Erdalkalielemente (∑ AE) sowie die Summe der Elemente Aluminium und Silizium (∑ AE, ∑ Al+Si) sowie die daraus gebildeten Quotienten aufgeführt. Mittels der XPS-Spektroskopie wurden auch Kohlenstoff und Sauerstoff auf den Oberflächen der Leuchtstoffpartikel nachgewiesen, wobei Kohlenstoff wie auch Sauerstoff aus der Luft adsorbiert und/oder absorbiert werden können.

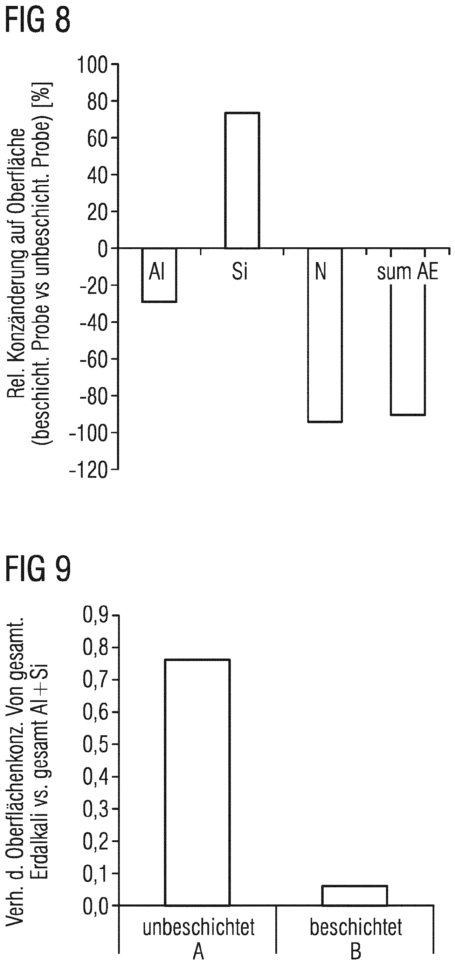

Figur 8 zeigt einen Vergleich der Änderungen der relativen Konzentrationen von Aluminium, Silizium, Stickstoff sowie der Summe der Erdalkalielemente Calcium, Barium und Strontium (Sum AE) in den Leuchtstoffpartikeln beim Vergleich einer beschichteten Probe mit einer unbeschichteten Probe. Deutlich ist zu erkennen, dass die Konzentration an Aluminium in der beschichteten Probe nur eine kleine Abnahme von zumindest 10% bis etwa 30% zeigt, während die Konzentration von Silizium auf der Oberfläche um zumindest 40 bis etwa 70% stark zunimmt. Gleichzeitig nehmen sowohl die Konzentrationen von Stickstoff als auch der Erdalkalimetallionen deutlich im Bereich von zumindest 60 bis etwa 90% bis 95%, bzw. 60% bis 100% ab. Diese Daten belegen deutlich, dass mittels des Säurebehandlungsschritts A) und dem anschließenden Tempern B) eine Schutzschicht gebildet wird, die an Erdalkaliionen und Stickstoff abgereichert und an Silizium angereichert ist, während Aluminium nur wenig abnimmt.

Figur 9 zeigt die Anreicherung an Silizium bzw. die Abreicherung an Erdalkaliionen gemessen als Verhältnis der Summe der Oberflächenkonzentration der Anteile der gesamten Erdalkaliionen und der Summe der Konzentrationen von Aluminium und Silizium. Deutlich ist zu erkennen, dass bei einer unbeschichteten Probe A das Verhältnis wesentlich höher ist als bei einer mittels eins erfindungsgemäßen Verfahrens beschichteten Probe B, da die Erdalkaliionen durch den Säurebehandlungsschritt aus den Oberflächenbereichen der Leuchtstoffpartikel weitestgehend entfernt werden.

Im Folgenden werden noch verschiedene Varianten von erfindungsgemäßen Verfahren und Verfahren gemäß mehreren Vergleichsbeispielen zur Herstellung von Leuchtstoffpartikeln mit Schutzschichten beschrieben. Der durchschnittliche Partikeldurchmesser des stabilisierten Leuchtstoffs der verschiedenen Ausführungsbeispiele liegt jeweils bei ca. 10-16 µm, wobei die Maschenweite der verwendeten Siebe bei 31 µm lag:

### Ausführungsbeispiel 1:

20 Gramm eines Leuchtstoffs der allgemeinen Formel Sr(SrₐCa₁₋ₐ)Si₂Al₂N₆:Eu mit a = 0,86 und einem Europiumanteil von 3% (Phasenreinheit ≥ 95%) wurden in 200 ml entionisiertes Wasser gegeben und ständig gerührt. Zu der Dispersion wurden 6 ml verdünnte Salzsäure (c = 2 Mol/l) hinzugegeben und die Mischung auf eine Temperatur von 75 bis 85° C aufgeheizt. Die Mischung wurde in diesem Temperaturbereich gehalten und ständig für fünf Stunden gerührt. Der pH-Wert wurde ständig beobachtet und bei Werten von kleiner 5 gehalten, indem eine Dosierpumpe mit einem pH-Meter verbunden wurde. Insgesamt wurden 0,8 ml verdünnte Salzsäure hinzugegeben. Die mit der Säure ausgelaugten Leuchtstoffpartikel wurden dann gefiltert und abgesaugt und intensiv zuerst mit Wasser und dann mit Ethanol gewaschen. Die Leuchtstoffpartikel wurden dann für zwei Stunden bei 60° C getrocknet und dann gesiebt. Die trockenen Leuchtstoffpartikel wurden dann bei 350° C für fünf Stunden getempert. Die resultierenden Leuchtstoffpartikel wurden mit "SP-1" bezeichnet.

### Ausführungsbeispiel 2:

20 g eines Leuchtstoffpulvers mit der Zusammensetzung Sr(SrₐCa₁₋ₐ)Si₂Al₂N₆:Eu mit a = 0,86 und einem Europiumanteil von 3 % (Phasenreinheit ≥ 95 %) wurden zu 150 ml einer Pufferlösung (bestehend aus äquimolaren Anteilen von Essigsäure und Natriumacetat) hinzugegeben und ständig gerührt. Die Mischung wurde auf eine Temperatur von 75 bis 85 °C aufgeheizt. Die Mischung wurde für 5 h in diesem Temperaturbereich gehalten, während sie ständig gerührt wurde. Der pH-Wert wurde während des Prozesses mit Hilfe eines pH-Wert-Indikatorpapiers stündlich bestimmt. Während dieser Zeit blieb der pH-Wert bei Werten zwischen 4 und 5 konstant. Der säurebehandelte Leuchtstoff wurde dann gefiltert und abgesaugt und extensiv gewaschen, zuerst mit Wasser und zuletzt mit Ethanol. Das Leuchtstoffpulver wurde für 2 h bei 60 °C getrocknet und dann gesiebt. Der getrocknete Leuchtstoff wurde dann bei 350 °C für 5 h getempert. Der resultierende stabilisierte Leuchtstoff wurde als "SP-2" bezeichnet.

### Ausführungsbeispiel 3:

20 g eines Leuchtstoffpulvers mit der Zusammensetzung Sr(SrₐCa₁₋ₐ)Si₂Al₂N₆:Eu mit a = 0,86 und einem Europiumanteil von 3 % (Phasenreinheit ≥ 95 %) wurden in 200 ml entionisiertes Wasser gegeben und beständig gerührt. Zu der Dispersion wurde 10 ml verdünnte Salzsäure (c = 2 Mol/l) gegeben und die Mischung auf eine Temperatur zwischen 75 und 85 °C aufgeheizt. Der Leuchtstoff wurde bei dieser Temperatur ausgelaugt, während für 5 h ständig gerührt wurde. Der pH-Wert wurde während des Prozesses stündlich mit Hilfe einer pH-Wert-Messsonde bestimmt. Während dieser Zeit war der pH-Wert anfänglich bei 2,6 (gemessen nach Zugabe der Säure) und hat anschließend auf 7,3 zugenommen. Der ausgelaugte Leuchtstoff wurde dann durch Absaugen gefiltert und intensiv zuerst mit Wasser und zuletzt mit Ethanol gewaschen. Das Leuchtstoffpulver wurde für 2 h bei 60 °C getrocknet und dann gesiebt. Zuletzt wurde der getrocknete Leuchtstoff bei 350 °C für 5 h getempert. Der resultierende stabilisierte Leuchtstoff wurde als "SP-3" bezeichnet.

### Vergleichsbeispiel 4:

20 g eines Leuchtstoffpulvers mit der Zusammensetzung Sr(SrₐCa₁₋ₐ)Si₂Al₂N₆:Eu mit a = 0,86 und einem Europiumanteil von 3 % (Phasenreinheit ≥ 95 %) wurden in 200 ml entionisiertes Wasser gegeben und ständig gerührt. Zu der Dispersion wurden 25 ml verdünnte Salzsäure (c = 2 Mol/l) hinzugegeben und die Mischung auf eine Temperatur von 75 bis 85 °C aufgeheizt. Die Mischung wurde dann in diesem Temperaturbereich gehalten während ständig für 5 h gerührt wurde. Der pH-Wert wurde während des Prozesses stündlich mit Hilfe einer pH-Wert-Messsonde bestimmt. Während dieser Zeit war der pH-Wert anfänglich bei 1,1 (gemessen nach Zugabe der Säure) und nahm dann auf 3,1 zu. Das ausgelaugte Leuchtstoffpulver wurde dann unter Absaugen gefiltert und intensiv zuerst mit Wasser und dann mit Ethanol gewaschen. Das Leuchtstoffpulver wurde dann für 2 h bei 60 °C getrocknet und dann gesiebt. Das trockene Leuchtstoffpulver wurde anschließend bei 350 °C für 5 h getempert und der resultierende stabilisierte Leuchtstoff als "SP-4" bezeichnet.

### Ausführungsbeispiel 5:

20 g eines Leuchtstoffpulvers mit der Zusammensetzung Sr(SrₐCa₁₋ₐ)Si₂Al₂N₆:Eu mit a = 0,86 und einem Europiumanteil von 3 % (Phasenreinheit ≥ 95 %) wurden in 200 ml entionisiertes Wasser gegeben und ständig gerührt. Zu der Dispersion wurden 15 ml verdünnte Salzsäure (c = 2 Mol/l) gegeben und die Mischung auf eine Temperatur von 75 bis 85 °C aufgeheizt. Die Mischung wurde in diesem Temperaturbereich unter ständigem Rühren für 2 h gehalten. Der pH-Wert wurde zu Beginn und am Ende des Prozesses mit Hilfe einer pH-Wert-Messsonde bestimmt. Während dieser Zeit betrug der pH-Wert anfänglich 1,6 (gemessen nach Zugabe der Säure) und hat dann auf einen pH-Wert von 4,5 zugenommen. Der ausgelaugte Leuchtstoff wurde dann unter Absaugen gefiltert und intensiv zuerst mit Wasser und zuletzt mit Ethanol gewaschen. Das Leuchtstoffpulver wurde dann für 2 h bei 60 °C getrocknet und gesiebt. Zuletzt wurde das getrocknete Leuchtstoffpulver bei 350 °C für 5 h getempert und der resultierende stabilisierte Leuchtstoff als "SP-5" bezeichnet.

### Vergleichsbeispiel 6:

20 g eines Leuchtstoffpulvers mit der Zusammensetzung Sr(SrₐCa₁₋ₐ)Si₂Al₂N₆:Eu mit a = 0,86 und einem Europiumanteil von 3 % (Phasenreinheit ≥ 95 %) wurden in 200 ml entionisiertes Wasser gegeben und ständig gerührt. Zu der Dispersion wurden 25 ml verdünnte Salzsäure (c = 2 Mol/l) gegeben und die Mischung wurde auf eine Temperatur von 75 bis 85 °C aufgeheizt. Die Mischung wurde in diesem Temperaturbereich unter ständigem Rühren für 8 h gehalten. Der pH-Wert wurde zu Beginn und am Ende des Prozesses mit Hilfe einer pH-Wert-Messsonde bestimmt. Nach dieser Zeit betrug der pH-Wert der Mischung 3. Das ausgelaugte Leuchtstoffpulver wurde dann unter Absaugen gefiltert und intensiv zuerst mit Wasser und zuletzt mit Ethanol gewaschen. Das Leuchtstoffpulver wurde danach für 2 h bei 60 °C getrocknet und dann gesiebt. Der getrocknete Leuchtstoff wurde dann bei 350 °C für 5 h getempert. Der resultierende stabilisierte Leuchtstoff wurde als "SP-6" bezeichnet.

### Vergleichsbeispiel 7:

20 g eines Leuchtstoffpulvers mit der Zusammensetzung Sr(SrₐCa₁₋ₐ)Si₂Al₂N₆:Eu mit a = 0,86 und einem Europiumanteil von 3 % (Phasenreinheit ≥ 95 %) wurden in 230 ml entionisiertes Wasser gegeben und ständig gerührt. Zu der Dispersion wurden 820 µl verdünnte Salzsäure (c = 5,8 Mol/l) gegeben und die Mischung wurde für 30 min bei Raumtemperatur gerührt. Der pH-Wert wurde zu Beginn und am Ende des Prozesses mit Hilfe einer pH-Wert-Messsonde bestimmt. Nach dieser Zeit betrug der pH-Wert der Mischung 5,2. Das ausgelaugte Leuchtstoffpulver wurde dann unter Absaugen gefiltert und intensiv zuerst mit Wasser und zuletzt mit Ethanol gewaschen. Das Leuchtstoffpulver wurde dann für 2 h bei 60 °C getrocknet und gesiebt. Zuletzt wurde das trockene Leuchtstoffpulver bei 350 °C für 5 h getempert und der resultierende stabilisierte Leuchtstoff als "SP-7" bezeichnet.

### Ausführungsbeispiel 8:

10 g eines Leuchtstoffpulvers mit der Zusammensetzung Sr(SrₐCa₁₋ₐ)Si₂Al₂N₆:Eu mit a = 0,82 und einem Europiumanteil von 2 % (Phasenreinheit ≥ 95 %) wurde in 500 ml entionisiertes Wasser gegeben und ständig gerührt. Zu der Dispersion wurden 7 ml verdünnte Salzsäure (c = 2 Mol/l) gegeben und die Mischung wurde auf eine Temperatur von 75 bis 85 °C aufgeheizt. Der Leuchtstoff wurde bei dieser Temperatur unter ständigem Rühren für 1,5 h ausgelaugt. Der ausgelaugte Leuchtstoff wurde dann unter Absaugen gefiltert und intensiv zuerst mit Wasser und zuletzt mit Ethanol gewaschen. Anschließend wurde das Leuchtstoffpulver für 2 h bei 60 °C getrocknet und dann gesiebt. Zuletzt wurde das Leuchtstoffpulver bei 350 °C für 5 h getempert und der stabilisierte resultierende Leuchtstoff als "SP-8" bezeichnet.

### Ausführungsbeispiel 9:

10 g eines Leuchtstoffpulvers mit der Zusammensetzung Sr(SrₐCa₁₋ₐ)Si₂Al₂N₆:Eu mit a = 0,82 und einem Europiumanteil von 2 % (Phasenreinheit ≥ 95 %) wurden in 500 ml entionisiertes Wasser gegeben und ständig gerührt. Zu der Dispersion wurden 7 ml verdünnte Salzsäure (C = 2 Mol/l) gegeben und die Mischung wurde auf eine Temperatur von 75 bis 85 °C aufgeheizt. Der Leuchtstoff wurde bei dieser Temperatur unter beständigem Rühren für 1,5 h ausgelaugt. Der pH-Wert wurde zu Beginn und am Ende des Prozesses mit Hilfe eines pH-Wert-Indikatorpapiers bestimmt. Der ausgelaugte Leuchtstoff wurde dann unter Absaugen gefiltert und intensiv zuerst mit Wasser und dann mit Ethanol gewaschen. Der Leuchtstoff wurde danach für 2 h bei 60 °C getrocknet und dann gesiebt. Zuletzt wurde der Leuchtstoff bei 250 °C für 5 h getempert und der resultierende stabilisierte Leuchtstoff als "SP-9" bezeichnet.

### Ausführungsbeispiel 10:

10 g eines Leuchtstoffpulvers mit der Zusammensetzung Sr(SrₐCa₁₋ₐ)Si₂Al₂N₆:Eu mit a = 0,82 und einem Europiumanteil von 2 % (Phasenreinheit ≥ 95 %) wurden in 500 ml entionisiertes Wasser gegeben und ständig gerührt. Zu der Dispersion wurden 7 ml verdünnte Salzsäure (c = 2 Mol/l) gegeben und die Mischung wurde auf eine Temperatur von 75 bis 85 °C aufgeheizt. Der Leuchtstoff wurde dann bei dieser Temperatur ausgelaugt, während ständig für 1,5 h gerührt wurde. Der pH-Wert wurde zu Beginn und am Ende des Prozesses mit Hilfe eines pH-Wert-Indikatorpapiers bestimmt. Danach wurde der ausgelaugte Leuchtstoff unter Absaugen gefiltert und intensiv zuerst mit Wasser und zuletzt mit Ethanol gewaschen. Danach wurde der Leuchtstoff bei 2 h bei 60 °C getrocknet und dann gesiebt. Zuletzt wurde der Leuchtstoff bei 350 °C für 5 h getempert und der resultierte stabilisierte Leuchtstoff als "SP-10" bezeichnet.

### Ausführungsbeispiel 11:

10 g eines Leuchtstoffpulvers mit der Zusammensetzung Sr(SrₐCa₁₋ₐ)Si₂Al₂N₆:Eu mit a = 0,86 und einem Europiumanteil von 2 % (Phasenreinheit ≥ 95 %) wurden in 500 ml entionisiertes Wasser gegeben und ständig gerührt. Zu der Dispersion wurden 7 ml verdünnte Salzsäure (c = 2 Mol/l) gegeben und die Mischung auf eine Temperatur von 75 bis 85 °C aufgeheizt. Danach wurde der Leuchtstoff bei dieser Temperatur unter beständigem Rühren für 1,5 h ausgelaugt. Der pH-Wert wurde zu Beginn und am Ende des Prozesses mit Hilfe eines pH-Wert-Indikatorpapiers bestimmt. Danach wurde der ausgelaugte Leuchtstoff unter Absaugen gefiltert und intensiv zuerst mit Wasser und dann mit Ethanol gewaschen. Danach wurde das Leuchtstoffpulver für 2 h bei 60 °C getrocknet und dann gesiebt. Zuletzt wurde das Leuchtstoffpulver bei 350 °C für 5 h getempert und der resultierende stabilisierte Leuchtstoff als "SP-11" bezeichnet.

### Vergleichsbeispiel 12:

10 g eines Leuchtstoffpulvers mit der Zusammensetzung Sr(SrₐCa₁₋ₐ)Si₂Al₂N₆:Eu mit a = 0,86 und einem Europiumanteil von 2 % (Phasenreinheit ≥ 95 %) wurden in 500 ml entionisiertes Wasser gegeben und ständig gerührt. Zu der Dispersion wurden 7 ml verdünnte Salzsäure (c = 2 Mol/l) gegeben und die Mischung auf eine Temperatur von 75 bis 85 °C aufgeheizt. Der Leuchtstoff wurde bei dieser Temperatur unter ständigem Rühren für 1,5 h ausgelaugt. Der pH-Wert wurde zu Beginn und am Ende des Prozesses mit Hilfe eines pH-Wert-Indikatorpapiers bestimmt. Danach wurde der ausgelaugte Leuchtstoff unter Absaugen gefiltert und intensiv zuerst mit Wasser und zuletzt mit Ethanol gewaschen. Danach wurde das Leuchtstoffpulver für 2 h bei 60 °C getrocknet und dann gesiebt. Zuletzt wurde der getrocknete Leuchtstoff bei 450 °C für 5 h getempert und der resultierende stabilisierte Leuchtstoff als "SP-12" bezeichnet.

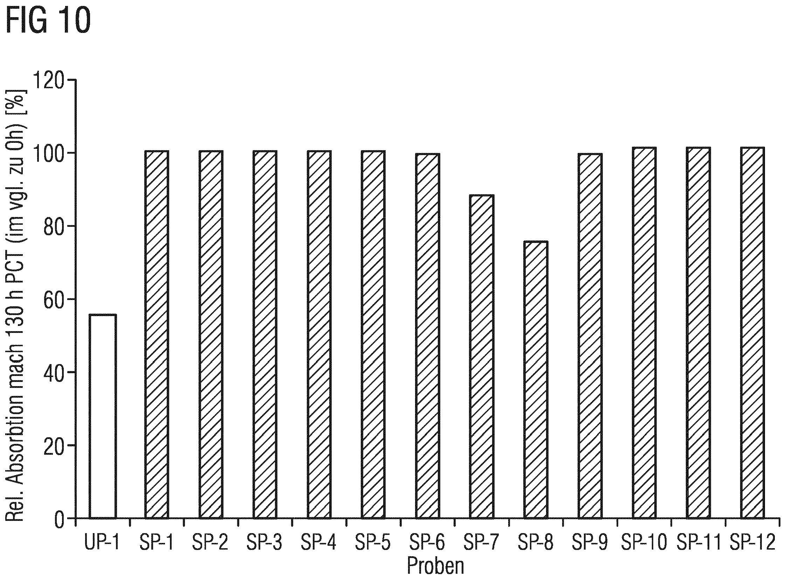

Die relative Stabilität der ausgelaugten Proben "SP-1" bis "SP-12" wurde mittels eines PCT-Tests über einen Zeitraum von 130 h evaluiert und die Ergebnisse in Figur 10 dargestellt. Als Referenz ist auch die relative Stabilität einer nicht mit einer Schutzschicht überzogenen Probe eines vergleichbaren Leuchtstoffs, bezeichnet als "UP-1", gezeigt. Deutlich ist zu erkennen, dass alle mit der Säurelösung behandelten Proben gegenüber der unbehandelten Probe eine erhöhte Stabilität aufweisen.

In den Figuren 11a bis 11c sind die Dominanzwellenlängen, die relativen Intensitäten der Photolumineszenz und die relativen augenbewerteten Photolumineszenzintensitäten verschiedener Ausführungsformen eines neuartigen Leuchtstoffs der Formel Sr(Sr_{0,86}Ca_{0,14})Si₂Al₂N₆:Eu in Abhängigkeit von steigenden Aktivatorkonzentrationen an Europium gezeigt. Mit steigender Konzentration an Europium-Dotierstoff verschiebt sich dabei die Dominanzwellenlänge der Emission der neuartigen Leuchtstoffe zu höheren Wellenlängen vom orangenen zu roten Farbbereich (siehe Figur 11a) hin, wobei die relative Intensität der Photolumineszenz von 0.1- etwa 4 Mol% ansteigt und dann bei weiter ansteigenden Aktivatorkonzentrationen an Europium wieder abfällt (siehe Figur 11b). Bezogen auf die relative Intensität der Photolumineszenz ist ein Konzentrationsbereich von 1-10 Mol% Eu, bzw. 2-5Mol% bevorzugt. Weitgehend analog zur relativen Intensität der Photolumineszenz verhält sich auch die relative mit der Augenempfindlichkeit bewertete lumineszente Photolumineszenzintensität, die ebenfalls mit steigenden Aktivatorkonzentrationen an Europium zunimmt und ab etwa 4 Mol% bis etwa 20 Mol% wieder absinkt (siehe Figur 11c). Dabei wird die Empfindlichkeit des menschlichen Auges für Tagsehen berücksichtigt. Bezogen auf die lumineszente Photolumineszenzintensität sind Aktivatorkonzentrationen von 0,4-10 Mol% Eu, bzw. 1-5 Mol% Europium bevorzugt.

Die Figuren 12a und 12b zeigen die Einwaagen m in Gramm für verschiedene Edukte zur Herstellung von herkömmlichen CaAlSiN₃-Leuchtstoffen und neuartigen Leuchtstoffen der allgemeinen Formel Sr(SrₐM₁₋ₐ)Si₂Al₂N₆:D. Einwaagen mit x kleiner gleich 0,8 bezeichnen dabei herkömmliche CaAlSiN₃-Leuchtstoffe während Einwaagen mit x größer 0,8 (entspricht a > 0,6) neuartige rot oder orange emittierende Leuchtstoffe kennzeichnen.

Im Vergleich zu herkömmlichen Beschichtungsprozessen, die beispielsweise eine Schutzschicht mittels chemischer Gasphasenabscheidung (CVD) erzeugen, beziehungsweise eine Siliziumdioxidschicht durch Hydrolyse von Tetraethylorthosilikat, auch Tetraethoxysilan (TEOS) genannt, erzeugen, ist das erfindungsgemäße Verfahren wesentlich einfacher aufgebaut und kostengünstiger. Insbesondere sind keine komplexen Apparaturen und teuren Chemikalien notwendig. Weiterhin können die erfindungsgemäßen Prozesse ohne leicht entflammbare Ausgangsmaterialien durchgeführt werden und benötigen nur kleine Mengen an Ethanol. Weiterhin ist die Haftfähigkeit der erzeugten Schutzschicht auf den Leuchtstoffpartikeln größer als bei einer über externe Chemikalien aufgebrachten Schutzschicht, da die Schutzschicht direkt aus dem auf den Oberflächenbereichen der Leuchtstoffpartikel befindlichen Leuchtstoffmaterial "intrinsisch" gebildet wird. Daher sind mit dem erfindungsgemäßen Verfahren beschichtete Leuchtstoffe auch weniger anfällig für Hydrolyse.

## Patentansprüche

1. Verfahren zur Herstellung von Leuchtstoffpartikeln eines Si-haltigen und/oder Al-haltigen Leuchtstoffs mit einer Schutzschicht umfassend die Verfahrensschritte:
A) Behandeln des Si-haltigen und/oder Al-haltigen Leuchtstoffs mit einer Säurelösung, wobei der pH-Wert der Säurelösung innerhalb eines Bereichs von pH 3,5 bis 7 für einen Zeitraum von zumindest 1 h gehalten wird und wobei eine Si-haltige Schicht auf den Leuchtstoffpartikeln gebildet wird, die einen höheren Gehalt an Si aufweist auf der Oberfläche als die Leuchtstoffpartikel und/oder eine Al-haltige Schicht auf den Leuchtstoffpartikeln gebildet wird, die einen im Vergleich zu den Leuchtstoffpartikeln veränderten Gehalt an Aluminium auf der Oberfläche aufweist,
B) Tempern der behandelten Leuchtstoffpartikel bei einer Temperatur zwischen 250 °C und 400 °C unter Erzeugung der Schutzschicht.

2. Verfahren nach dem vorhergehenden Patentanspruch, wobei im Verfahrensschritt A) zumindest eines der folgenden Verfahren zur pH-Kontrolle angewandt wird:
- Zugabe einer Säure in Abhängigkeit vom pH-Wert der Säurelösung
- Zugabe einer Pufferlösung,
- Zugabe einer definierten Menge an Säurelösung in Abhängigkeit von der Menge an Leuchtstoff.

3. Verfahren nach einem der vorhergehenden Patentansprüche, wobei im Verfahrensschritt A) als Säuren mineralische Säuren, wie HCl und/oder organische Säuren wie Essigsäure verwendet werden.

4. Verfahren nach einem der vorhergehenden Patentansprüche, wobei im Verfahrensschritt A) der pH-Wert in einem Bereich von pH 4 bis 6,5 gehalten wird.

5. Verfahren nach einem der vorhergehenden Patentansprüche, wobei im Verfahrensschritt A) das Behandeln des Si-haltigen und/oder Al-haltigen Leuchtstoffs mit einer Säurelösung für einen Zeitraum von 1 bis 10 h, bevorzugt 2 bis 7 h, weiter bevorzugt 4 bis 5 h durchgeführt wird.

6. Verfahren nach einem der vorhergehenden Patentansprüche wobei im Verfahrensschritt B) das Tempern bei Temperaturen zwischen 300 °C bis 400°C, bevorzugt 300°C bis 350°C durchgeführt wird.

7. Verfahren nach einem der vorhergehenden Patentansprüche, wobei im Verfahrensschritt B) das Tempern in einer sauerstoffhaltigen Atmosphäre durchgeführt wird.

8. Verfahren nach einem der vorhergehenden Patentansprüche, wobei im Verfahrensschritt B) das Tempern mit einer Aufheizrate zwischen 1°C/h und 100°C/h, bevorzugt zwischen 5°C/h und 50°C/h, weiter bevorzugt zwischen 10°C/h und 20°C/h durchgeführt wird.

9. Verfahren nach einem der vorhergehenden Patentansprüche, wobei ein Si-haltiger und/oder Alhaltiger Leuchtstoff verwendet wird, der zusätzlich Erdalkali-Ionen aufweist und wobei im Verfahrensschritt A) eine Schicht auf den Leuchtstoffpartikeln gebildet wird, die einen geringeren Gehalt an Erdalkali-Ionen aufweist als die Leuchtstoffpartikel.

10. Verfahren nach einem der vorhergehenden Patentansprüche, wobei als Si-haltiger und/oder Alhaltiger Leuchtstoff ein Leuchtstoff verwendet wird, der eine anorganische Substanz beinhaltet, die in ihrer Zusammensetzung zumindest das Element D, das Element A1, das Element AX, das Element SX und das Element NX beinhaltet, wobei D eines, zwei oder mehrere Elemente aus der Gruppe Mn, Ce, Pr, Nd, Sm, Eu, Tb, Dy, Ho, Er, Tm, Li, Na, K, Rb, Cs und Yb darstellt, A1 eines, zwei oder mehrere Elemente aus der Gruppe der divalenten Metalle darstellt, die nicht in D beinhaltet sind, *SX* eines, zwei oder mehrere Elemente aus der Gruppe der tetravalenten Metalle beinhaltend Si darstellt, AX eines, zwei oder mehrere Elemente aus der Gruppe der trivalenten Metalle darstellt, und NX eines, zwei oder mehrere Elemente aus der Gruppe O, N, S, C, Cl, F darstellt und der dieselbe Kristallstruktur aufweist, wie Sr(SrₐCa₁₋ₐ)Si₂Al₂N₆.

11. Verfahren nach dem vorhergehenden Patentanspruch, wobei der Si-haltige Leuchtstoff ein Leuchtstoff mit der allgemeinen Formel ist:
Sr(SrₐM₁₋ₐ)Si₂Al₂(N,X)₆: D, A, B, E, G, L
- wobei M ausgewählt aus Ca, Ba, Mg allein oder in Kombination, A ausgewählt aus zweiwertigen zu M und D unterschiedlichen Metallen, B = dreiwertige Metalle, E = einwertige Metalle, G = vierwertige Elemente, L = dreiwertige Elemente und X = O oder Halogen.

12. Verfahren nach Anspruch 1, wobei der Si-haltige und/oder Al-haltige Leuchtstoff ein Leuchtstoff mit der allgemeinen Formel Sr(SraM₁₋ₐ)Si₂Al₂N₆:D ist, wobei M ausgewählt ist aus der Gruppe Ca, Ba, Zn, Mg und D ausgewählt aus: Eu und Ce.

13. Leuchtstoffpartikel mit einer auf zumindest Teilen der Oberfläche der Leuchstoffpartikel befindlichen Schutzschicht, wobei
- die Leuchtstoffpartikel einen Si-haltigen und/oder Al-haltigen Leuchtstoff umfassen, der eine anorganische Substanz beinhaltet, die in ihrer Zusammensetzung zumindest das Element D, das Element A1, das Element AX, das Element SX und das Element NX beinhaltet, wobei D eines, zwei oder mehrere Elemente aus der Gruppe Mn, Ce, Pr, Nd, Sm, Eu, Tb, Dy, Ho, Er, Tm, Li, Na, K, Rb, Cs und Yb darstellt, A1 eines, zwei oder mehrere Elemente aus der Gruppe der divalenten Metalle darstellt, die nicht in D beinhaltet sind, *SX* eines, zwei oder mehrere Elemente aus der Gruppe der tetravalenten Metalle beinhaltend Si darstellt, AX eines, zwei oder mehrere Elemente aus der Gruppe der trivalenten Metalle darstellt, und NX eines, zwei oder mehrere Elemente aus der Gruppe O, N, S, C, Cl, F darstellt und der dieselbe Kristallstruktur aufweist, wie Sr(SrₐCa₁₋ₐ)Si₂Al₂N₆ und
- die Schutzschicht einen zumindest um 40 Atom%, bevorzugt zumindest um 60 Atom% gegenüber dem Leuchtstoff erhöhten Gehalt an Si und/oder einen zumindest um 10%, bevorzugt zumindest um 20% gegenüber dem Leuchtstoff erniedrigten Gehalt an Al aufweist.

14. Leuchtstoffpartikel nach dem vorhergehenden Patentanspruch, wobei
- Die Leuchstoffpartikel zusätzlich Erdalkali-Ionen umfassen, und
- Die Schutzschicht einen zumindest um 40 Atom%, bevorzugt zumindest um 60 Atom% gegenüber dem Leuchtstoff erniedrigten Gehalt an Erdalkali-Ionen aufweist.

15. Leuchtstoffpartikel nach einem der vorhergehenden Patentansprüche 13 oder 14, wobei
- die Leuchtstoffpartikel zusätzlich N umfassen, und
- die Schutzschicht einen zumindest um 40 Atom%, bevorzugt zumindest um 60 Atom% gegenüber dem Leuchtstoff erniedrigten Gehalt an N aufweist.

16. Leuchtstoffpartikel nach einem der vorhergehenden Patentansprüche 13 bis 15, wobei der Si-Gehalt der Schutzschicht um mindestens 40 Atom% gegenüber dem Leuchtstoff erhöht ist.

17. Leuchtstoffpartikel nach einem der vorhergehenden Patentansprüche 13 bis 16, wobei der Al-Gehalt der Schutzschicht um etwa 10 Atom% bis maximal 50 Atom% gegenüber dem Leuchtstoff erniedrigt ist.

18. Leuchtstoffpartikel nach einem der vorhergehenden Patentansprüche 13 bis 17, wobei
- der Si-haltige Leuchtstoff ein Leuchtstoff mit der allgemeinen Formel ist:
Sr(SrₐM₁₋ₐ)Si₂Al₂(N,X)₆:D, A, B, E, G, L
- wobei M ausgewählt aus Ca, Ba, Mg allein oder in Kombination, A ausgewählt aus zweiwertigen zu M und D unterschiedlichen Metallen, B = dreiwertige Metalle, E = einwertige Metalle, G = vierwertige Elemente, L = dreiwertige Elemente und X = O oder Halogen.

19. Leuchtstoffpartikel nach einem der vorhergehenden Patentansprüche 13 bis 18, wobei
- die Schutzschicht gemäß eines Verfahrens nach einem der Patentansprüche 1 bis 12 herstellbar ist.

## Claims

1. Method for the production of phosphor particles of an Si-containing and/or Al-containing phosphor with a protective layer, comprising the method steps:
A) Treatment of the Si-containing and/or Al-containing phosphor with an acid solution, wherein the pH value of the acid solution is maintained within a range of pH 3.5 to 7 for a period of at least 1 h and wherein an Si-containing layer is formed on the phosphor particles, which layer has a higher content of Si on the surface than the phosphor particles, and/or an Al-containing layer is formed on the phosphor particles, which layer has a modified content of aluminum on the surface compared with the phosphor particles,
B) Tempering of the treated phosphor particles at a temperature between 250°C and 400 °C with production of the protective layer.

2. Method according to the preceding claim, wherein in method step A) at least one of the following methods is applied for pH control:
- addition of an acid as a function of the pH value of the acid solution
- addition of a buffer solution,
- addition of a defined quantity of acid solution as a function of the quantity of phosphor.

3. Method according to one of the preceding claims, wherein in method step A) mineral acids such as HCl and/or organic acids such as acetic acid are used as acids.

4. Method according to one of the preceding claims, wherein in method step A) the pH value is maintained in a range of pH 4 to 6.5.

5. Method according to one of the preceding claims, wherein in method step A) the treatment of the Si-containing and/or Al-containing phosphor is carried out with an acid solution for a period of 1 to 10 h, preferably 2 to 7 h, more preferably 4 to 5 h.

6. Method according to one of the preceding claims, wherein in method step B)the tempering is carried out at temperatures between 300°C and 400°C, preferably 300°C to 350°C.

7. Method according to one of the preceding claims, wherein in method step B) the tempering is carried out in an atmosphere containing oxygen.

8. Method according to one of the preceding claims, wherein in method step B) the tempering is carried out at a heating rate of between 1° C/h and 100°C/h, preferably between 5°C/h and 50°C/h, more preferably between 10°C/h and 20°C/h.

9. Method according to one of the preceding claims, wherein an Si-containing and/or Al-containing phosphor is used, which additionally has alkaline earth ions and wherein in method step A) a layer is formed on the phosphor particles that has a lower content of alkaline earth ions than the phosphor particles.

10. Method according to one of the preceding claims, wherein a phosphor that contains an inorganic substance is used as Si-containing and/or Al-containing phosphor, which substance includes in its composition at least the element D, the element A1, the element AX, the element SX and the element NX, wherein D represents one, two or more elements from the group Mn, Ce, Pr, Nd, Sm, Eu, Tb, Dy, Ho, Er, Tm, Li, Na, K, Rb, Cs and Yb, A1 represents one, two or more elements from the group of divalent metals that are not included in D, SX represents one, two or more elements from the group of tetravalent metals containing Si, AX represents one, two or more elements from the group of trivalent metals, and NX represents one, two or more elements from the group O, N, S, C, Cl, F and has the same crystal structure as Sr(SrₐCa₁₋ₐ)Si₂Al₂N₆.

11. Method according to the preceding claim, wherein the Si-containing phosphor is a phosphor with the general formula:
Sr(SrₐM₁₋ₐ)Si₂Al₂(N,X)₆:D,A,B,E,G,L
- wherein M is selected from Ca, Ba, Mg alone or in combination, A is selected from divalent metals different from M and D, B = trivalent metals, E = monovalent metals, G = tetravalent elements and L = trivalent elements and X = O or halogen.

12. Method according to claim 1, wherein the Si-containing and/or Al-containing phosphor is a phosphor with the general formula Sr(SrₐM₁₋ₐ)Si₂Al₂N₆:D, wherein M is selected from the group Ca, Ba, Zn, Mg and D is selected from: Eu and Ce.

13. Phosphor particles with a protective layer located on at least parts of the surface of the phosphor particles, wherein
- the phosphor particles comprise an Si-containing and/or Al-containing phosphor, which contains an inorganic substance, which contains in its composition at least the element D, the element A1, the element AX, the element SX and the element NX, wherein D represents one, two or more elements from the group Mn, Ce, Pr, Nd, Sm, Eu, Tb, Dy, Ho, Er, Tm, Li, Na, K, Rb, Cs and Yb, A1 represents one, two or more elements from the group of divalent metals that are not included in D, SX represents one, two or more elements from the group of tetravalent metals containing Si, AX represents one, two or more elements from the group of trivalent metals, and NX represents one, two or more elements from the group O, N, S, C, Cl, F and has the same crystal structure as Sr(SrₐCa₁₋ₐ)Si₂Al₂N₆ and
- the protective layer has a content of Si that is increased by at least 40 at.%, preferably by at least 60 at.% compared with the phosphor and/or a content of Al that is reduced by at least 10%, preferably by at least 20% compared with the phosphor.

14. Phosphor particles according to the preceding claim, wherein
- the phosphor particles additionally comprise alkaline earth ions, and
- the protective layer has a content of alkaline earth ions that is reduced by at least 40 at.%, preferably by at least 60 at.% compared with the phosphor.

15. Phosphor particles according to one of the preceding claims 13 or 14, wherein
- the phosphor particles additionally comprise N, and
- the protective layer has a content of N that is reduced by at least 40 at.%, preferably by at least 60 at.% compared with the phosphor.

16. Phosphor particles according to one of the preceding claims 13 to 15, wherein the Si content of the protective layer is increased by at least 40 at.% compared with the phosphor.

17. Phosphor particles according to one of the preceding claims 13 to 16, wherein the Al content of the protective layer is reduced by roughly 10 at.% to a maximum of 50 at.% compared with the phosphor.

18. Phosphor particles according to one of the preceding claims 13 to 17, wherein
- the Si-containing phosphor is a phosphor with the general formula:
Sr(SrₐM₁₋ₐ)Si₂Al₂(N,X)₆:D,A,B,E,G,L
- wherein M is selected from Ca, Ba, Mg alone or in combination, A is selected from divalent metals different from M and D, B = trivalent metals, E = monovalent metals, G = tetravalent elements, L = trivalent elements and X = O or halogen.

19. Phosphor particles according to one of the preceding claims 13 to 18, wherein
- the protective layer can be produced according to a method according to one of claims 1 to 12.

## Revendications

1. Procédé de fabrication de particules de substance luminescente d'une substance luminescente contenant du Si et/ou de l'Al dotée d'une couche protectrice, comprenant les étapes suivantes :
A) traitement de la substance luminescente contenant du Si et/ou de l'Al avec une solution acide, le pH de la solution acide étant maintenu dans une plage de pH comprise entre 3,5 et 7 pendant au moins une heure, et une couche contenant du Si se formant sur les particules de substance luminescente et présentant une teneur en Si plus élevée en surface que les particules de substance luminescente et/ou une couche contenant de l'Al se formant sur les particules de substance luminescente et présentant en surface une teneur modifiée en aluminium par rapport aux particules de substance luminescente,
B) recuit à une température comprise entre 250 °C et 400 °C des particules de substance luminescente traitées, créant ainsi la couche protectrice.

2. Procédé selon la revendication précédente, dans lequel au moins l'un des procédés de contrôle du pH suivants est appliqué durant l'étape A) :
- ajout d'un acide en fonction du pH de la solution acide
- ajout d'une solution tampon,
- ajout d'une quantité définie de solution acide en fonction de la quantité de substance luminescente.

3. Procédé selon l'une des revendications précédentes, durant lequel des acides minéraux tels que HCl et/ou des acides organiques tels que l'acide acétique sont utilisés à l'étape A).

4. Procédé selon l'une des revendications précédentes, durant lequel la valeur du pH est maintenue dans une plage comprise entre pH 4 et 6,5 à l'étape A).

5. Procédé selon l'une des revendications précédentes, durant lequel le traitement de la substance luminescente contenant du Si et/ou de l'Al avec une solution acide est effectué à l'étape A) pendant 1 à 10 heures, de préférence pendant 2 à 7 heures, plus particulièrement pendant 4 à 5 heures.

6. Procédé selon l'une des revendications précédentes, durant lequel le recuit est effectué à l'étape B) à des températures comprises entre 300°C et 400°C, de préférence entre 300°C et 350°C.

7. Procédé selon l'une des revendications précédentes, durant lequel le recuit est effectué à l'étape B) dans une atmosphère contenant de l'oxygène.

8. Procédé selon l'une des revendications précédentes, durant lequel le recuit est effectué à l'étape B) à une vitesse de chauffage comprise entre 1°C/h et 100°C/h, de préférence entre 5°C/h et 50°C/h, plus particulièrement entre 10°C/h et 20°C/h.

9. Procédé selon l'une des revendications précédentes, durant lequel une substance luminescente contenant du Si et/ou de l'Al ainsi que des ions alcalino-terreux est utilisée et durant lequel une couche présentant une teneur en ions alcalino-terreux inférieure à celle des particules de substance luminescente se forme à l'étape A) sur les particules de substance luminescente.

10. Procédé selon l'une des revendications précédentes, durant lequel la substance luminescente utilisée en tant que substance luminescente contenant du Si et/ou de l'Al comporte une substance inorganique comprenant dans sa composition au moins l'élément D, l'élément A1, l'élément AX, l'élément SX et l'élément NX, D représentant un, deux ou plusieurs éléments du groupe Mn, Ce, Pr, Nd, Sm, Eu, Tb, Dy, Ho, Er, Tm, Li, Na, K, Rb, Cs et Yb, A1 représentant un, deux ou plusieurs éléments du groupe des métaux divalents non compris dans D, *SX* représentant un, deux ou plusieurs éléments du groupe des métaux tétravalents comprenant du Si, AX représentant un, deux ou plusieurs éléments du groupe des métaux trivalents, et NX représentant un, deux ou plusieurs éléments du groupe O, N, S, C, Cl, F et présentant la même structure cristalline que Sr (SrₐCa₁₋ₐ)Si₂Al₂N₆.

11. Procédé selon la revendication précédente, dans lequel la substance luminescente contenant du Si est une substance luminescente ayant la formule générale :
Sr(SrₐM₁₋ₐ)Si₂Al₂(N,X)₆:D,A,B,E,G,L
- M étant choisi parmi Ca, Ba, Mg seuls ou en combinaison, A étant choisi parmi les métaux divalents différents de M et D, B = métaux trivalents, E = métaux monovalents, G = éléments tétravalents, L = éléments trivalents et X = O ou halogène.

12. Procédé selon la revendication 1, dans lequel la substance luminescente contenant du Si et/ou contenant de l'Al est une substance luminescente ayant pour formule générale Sr(SrₐM₁₋ₐ)Si₂Al₂N₆:D, M étant choisi dans le groupe Ca, Ba, Zn, Mg et D : Eu et Ce.

13. Particules de substance luminescente avec une couche protectrice située au moins sur des parties de la surface des particules de substance luminescente,
- les particules de substance luminescente comprenant une substance luminescente contenant du Si et/ou de l'Al, qui comporte une substance inorganique incluant dans sa composition au moins l'élément D, l'élément A1, l'élément AX, l'élément SX et l'élément NX , D représentant un, deux ou plusieurs éléments du groupe Mn, Ce, Pr, Nd, Sm, Eu, Tb, Dy, Ho, Er, Tm, Li, Na, K, Rb, Cs et Yb, A1 représentant un, deux ou plusieurs éléments du groupe des métaux divalents non compris dans D, *SX* représentant un, deux ou plusieurs éléments du groupe des métaux tétravalents comprenant du Si, AX représentant un, deux ou plusieurs éléments du groupe des métaux trivalents, et NX représentant un, deux ou plusieurs éléments du groupe O, N, S, C, Cl, F et présentant la même structure cristalline que Sr(SrₐCa₁₋ₐ)Si₂Al₂N₆.
- la couche protectrice a une teneur en Si supérieure d'au moins 40 %at, de préférence d'au moins 60 %at, à celle de la substance luminescente et/ou une teneur en Al inférieure d'au moins 10 %, de préférence d'au moins 20 %, à celle de la substance luminescente.

14. Particules de substance luminescente selon la revendication précédente,
- les particules de substance luminescente contenant en outre des ions alcalino-terreux, et
- la couche protectrice présentant une teneur en ions alcalino-terreux réduite d'au moins 40 %at, de préférence d'au moins 60 %at par rapport à la substance luminescente.

15. Particules de substance luminescente selon l'une des revendications 13 à 14,
- les particules de substance luminescente contenant en outre de l'azote, et
- la couche protectrice présentant une teneur en azote réduite d'au moins 40 %at, de préférence d'au moins 60 %at par rapport à la substance luminescente.

16. Particules de substance luminescente selon l'une des revendications précédentes 13 à 15, dans lesquelles la teneur en Si de la couche protectrice est augmentée d'au moins 40 %at par rapport à la substance fluorescente.

17. Particules de substance luminescente selon l'une des revendications précédentes 13 à 16, la teneur en Al de la couche protectrice étant réduite d'environ 10 %at à un maximum de 50 %at par rapport à la substance luminescente.

18. Particules de substance luminescente selon l'une des revendications 13 à 17, dans lesquelles
- la substance luminescente contenant du Si est une substance luminescente ayant pour formule générale :
Sr(SrₐM₁₋ₐ)Si₂Al₂(N,X)₆:D,A,B,E,G,L
- M étant choisi parmi Ca, Ba, Mg seuls ou en combinaison, A étant choisi parmi des métaux divalents différents de M et D, B = métaux trivalents, E = métaux monovalents, G = éléments tétravalents, L = éléments trivalents et X = O ou halogène.

19. Particules de substance luminescente selon l'une des revendications 13 à 18, dans lesquelles
- la couche protectrice peut être produite suivant un procédé selon l'une des revendications 1 à 12.
